# EUROPEAN PATENT SPECIFICATION

(11) **EP 4 478 753 B1**
(45) Date of publication and mention of the grant of the patent: **25.11.2026**
(21) Application number: 23185232.8
(22) Date of filing: 13.07.2023
(51) Int. Cl.: H04W 4/80, A63B 22/00, H04L 67/12

(54) **COMMUNICATIONS PROTOCOL FOR SOFTWARE DRIVEN EXERCISE DEVICES**
KOMMUNIKATIONSPROTOKOLL FÜR SOFTWAREGESTEUERTE ÜBUNGSGERÄTE
PROTOCOLE DE COMMUNICATION POUR DISPOSITIFS D'EXERCICE COMMANDÉS PAR LOGICIEL

(30) Priority: 13.06.2023 US 202318334105
(43) Date of publication of application: 18.12.2024
(73) Proprietor: Zwift, Inc., Long Beach CA 90802 (US)
(72) Inventor: Andreescu, Alexandru, Long Beach, 90802 (US); Pollarolo, Davide, Long Beach, 90802 (US)
(74) Representative: Horler, Philip John

(56) References cited:
- US-A1- 2015 296 020
- US-A1- 2017 208 428
- US-B1- 9 338 638

## Description

### NOTICE OF COPYRIGHTS AND TRADE DRESS

A portion of the disclosure of this patent document contains material which is subject to copyright protection. This patent document may show and/or describe matter which is or may become trade dress of the owner. The copyright and trade dress owner has no objection to the facsimile reproduction by anyone of the patent disclosure as it appears in the Patent and Trademark Office patent files or records, but otherwise reserves all copyright and trade dress rights whatsoever.

### BACKGROUND

### Field

This disclosure relates to communications protocols and, more particularly to a protocol for communicating with software used to engage in exercise in conjunction with one or more accessory devices.

### Description of the Related Art

Over the last several, years, the gamification of exercise and the integration of social networks or network effects more generally with sports has become commonplace. Companies like Peloton^{®} have known that adding the ability of cyclists to compete against one another in a virtual spinning class is more likely to increase engagement, keep exercisers engaged and returning, and to enable individuals to be better-equipped to reach their fitness goals.

In a similar space, Zwift^{®} has offered its customers the ability to go on "road" style races within a virtual environment along said that customer's friends. The resulting experience has been a hit. Players arrange to meet up with one another to practice, ride, and even to compete in races. Players may interact with each other both in and outside of the game. Zwift offers a social networking component and feeds somewhat of a traditional trait of many cyclists: competitiveness. That players can see each other's progress, compare statistics, and engage in side-by-side races with athletes hundreds or thousands of miles away offers a unique set of experiences that Zwift's customers enjoy.

Zwift relies upon a virtual game world in which players interact. Players can move through the virtual world, exercising as they go, with their digital avatar representing their position and exercise effort within that world. Other systems rely upon video classes with instructors in the form of rowing instruction, spinning instruction, weight training, and the like. Typically, these experiences are shown on a display in front of the exercising individual.

To enable Zwift and other, similar, exercise systems to function and ensure a relative uniformity of experiences for its riders, Zwift is primarily reliant upon so-called "trainers." Trainers are devices that apply resistance to purpose-mounted outdoor cycles or to purpose-built indoor cycles. Typically, a trainer will replace the back wheel of a traditional, outdoor bicycle. In some cases, a trainer will rely upon a roller engaging with a back wheel of a traditional, outdoor bicycle. A trainer is distinguished from an indoor cycle in that it is designed to be mounted to any number of outdoor cycles to thereby create a resistance bicycle where previously there was only a traditional two-wheeled, outdoor bicycle. Without fail, when the word "trainer" is used herein, a so-called "smart" trainer is intended - meaning a trainer that can vary its resistance as directed by software operating on a computing device in communication with that trainer.

Increasingly, Zwift is also operable with purpose-built indoor cycles that are, in essence, trainers permanently (or temporarily) mounted on a "bicycle" (which may or may not have two wheels) and which is designed for the integration of a resistance device. Zwift and other software systems can function in much the same way with other variable, computer-controlled resistance exercise systems. These can include rowing machines, treadmills (though this is not usually resistance, it is typically speed and incline adjustment), resistance weight machines, and traditional indoor cycles. Any exercise device that operates using software-controlled resistance or variable speed could be controlled using the protocol described herein.

In addition, manufacturers are increasingly adding functionality to these rides. Most riders use a fan, primarily simply to keep themselves cool. Riding can be intense. But, there are fans that simulate the speed at which a rider is moving in an exercise. Likewise, there are front-mounted devices that raise and lower the front of a mounted bicycle to simulate going up and down hills. Still other devices simulate "lean" as a rider leans into a turn to try and better simulate the virtual environment. Shifting gears is common in cycling, downshifting to go up hills and upshifting to go down. Increasingly, indoor cycles and trainer-mounted cycles incorporate shifters, both wireless and physically connected by wires. Rowing machines can simulate currents or rougher waters. Treadmills can incline or decline to simulate road conditions.

One element that is relevant here is that the system utilizes software to control resistance or speed or other characteristics. In some of those cases, the same company controls the entire system (e.g. Peloton). However, in other cases the software must designed to be able to communicate with various exercise devices which may be connected to the software. In such a case, a uniform communication protocol may be advisable. Bluetooth^{®} low energy protocol exists and enables energy-efficient data transmission, but its capabilities are limited. Likewise, FTMS (Fitness Machine Service) protocol is available. However, its capabilities are also limited as it was designed some time ago and the numerous elements set forth above (e.g. incline or lean or shifting) were not expected. It would be beneficial if there were a protocol designed with present software-controlled exercise in mind and with the option for expandability in the future. It would be beneficial if the protocol would reduce overall latency, while being more robust, and conserving power. It would likewise be beneficial if the software device could operate as a central communication hub through which all connected devices communicate.
US 2017/208428 A1 discloses a method for connecting, by a first device, with a second device using Bluetooth communication.
US 9338638 B1 discloses a method for short service discovery including establishing a connection, by an apparatus, with a wireless device having a subset of service information available as default service information.
US 2015/296020 A1 discloses a method including initiating, in a first Bluetooth device connection establishment with a second Bluetooth device.

### DESCRIPTION OF THE DRAWINGS

FIG. 1 is an overview of an exercise device communications system.
FIG. 2 is a functional diagram of an exercise device communications system.
FIG. 3 is a functional diagram of a computing device.
FIG. 4 is an example of an exercise device.
FIG. 5 is an example of a handheld controller pair.
FIG. 6 is flowchart of a process of communication using a communications protocol.
FIG. 7 is a process flow for a communications protocol of a client write and a server indication.
FIG. 8 is a process flow for a communications protocol of a server notification.
FIG. 9 is a flowchart of a process of communications in an exercise device communications system.

Throughout this description, elements appearing in figures are assigned three-digit reference designators, where the most significant digit is the figure number where the element is first introduced and the two least significant digits are specific to the element. An element that is not described in conjunction with a figure may be presumed to have the same characteristics and function as a previously described element having the same reference designator.

### DETAILED DESCRIPTION

### Description of Apparatus

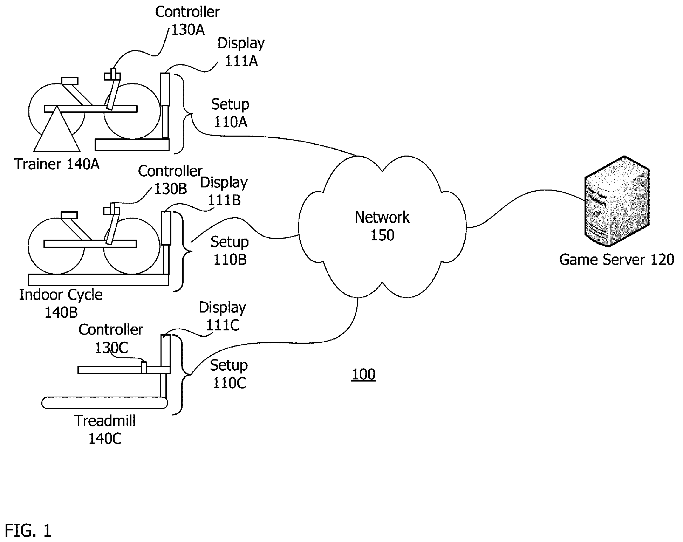

FIG. 1 is an overview of an exercise device communications system 100. The system 100 includes a series of setups 110A, 110B, and 110C, a game server 120, a series of controllers 130A, 130B, and 130C, a trainer 140A, an indoor cycle 140B, and a treadmill 140C, all interconnected by a network 150.

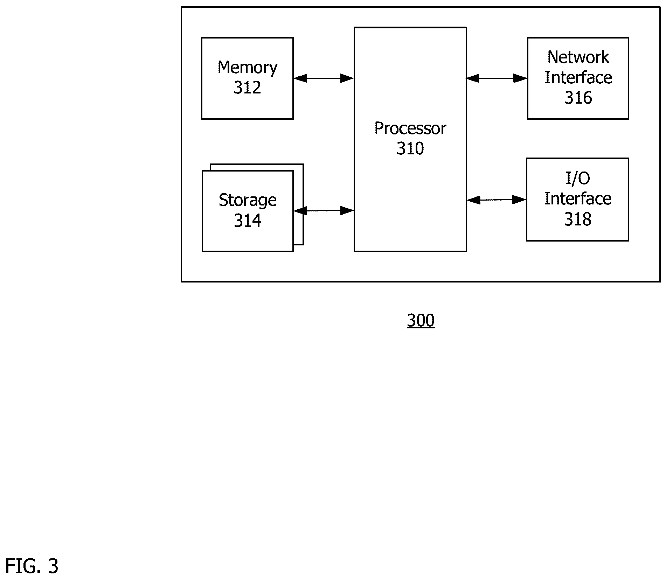

The setup 110A is made up of the display 111A, controller 130A, and trainer 140A. A setup as used herein means a complete set of equipment to engage in exercise. The display 111A is at least a display for showing an ongoing exercise routine, class, or gamified world in which exercise is taking place. Preferably, the display 111A is likewise a computing device (FIG. 3) capable of executing software to enable the exercise routine, class, or gamified world to be displayed. If the display 111A is not itself a computing device, then the display 111A must be in communications with a computing device to accomplish those tasks. The computing device is an integral part of a setup, like setup 110A

The setup 110B is similar to setup 110A except that there is no trainer used. Instead an indoor cycle 140B is used here. Display 111B and controller 130B are likewise present with similar functions discussed above and below.

The setup 110C is similar to setups 110A and 110B, except a treadmill 140C is used here. Display 111C and controller 130C are likewise present with similar functions discussed above and below.

The game server 120 is a computing device operating software which maintains the state of all connected players (or class participants). The game sever 120 preferably enables setups 110A, 110B, and 110C to connect thereto to engage in exercise as directed by the game server 120. The game server 120 may merely serve spinning classes or similar classes in video form as a streaming device (or a plurality of streaming devices). Or, the game server 120 may act very much like a game server in a non-exercise context, enabling authenticated connection by users to engage with a virtual world to which the setups 110A, 110B, and 110C connect to participate. The game server 120 may be a single computing device but is preferably a scalable cloud service with multiple computing devices in various locations throughout the world.

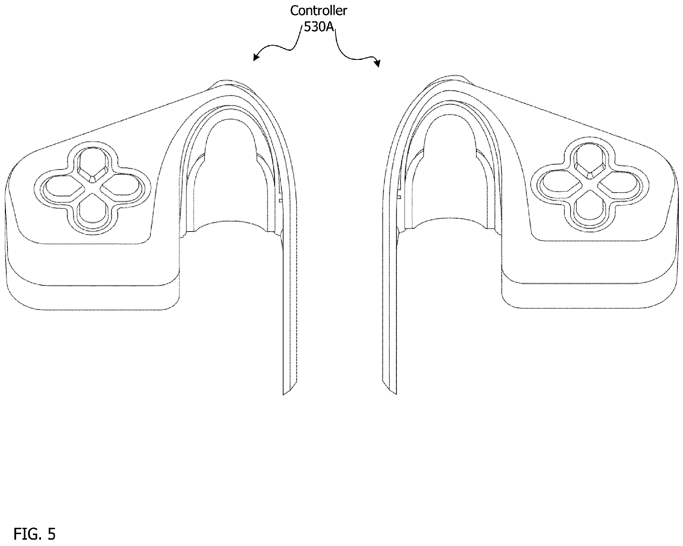

The controllers 130A, 130B, and 130C are remote control devices that operate in conjunction with software operating on the display 111A, 111B, or 111C to control some aspect of the respective setup. Controllers 130A, 130B, and 130C (FIG. 5) operate, for example, to send signals adjusting the resistance applied by the trainer 140A, indoor cycle 140B, or the speed of the treadmill 140C. Controllers 130A-130C may include joysticks or motion controllers and can be used to steer through a virtual world or to select one or more elements within the software operating on the displays 111A-111C.

The trainer 140A is a resistance device that applies resistance (or negative resistance - acceleration) to the setup 110A. The trainer 140A is in communication with the software operating on the computing device (e.g. in the display 111A) to alter the resistance applied as directed by the software. In the case of Zwift, the resistance may be increased as a rider's virtual avatar ascends a hill within the game. Alternatively, the rider's resistance may be decreased as a rider descends a hill, obtains a power-up, or drafts behind another rider. Braking or gear shifts may be simulated - as directed by the software - to correspond to signals indicating those changes. So, for example, the controller 130A may indicate to the software that a gear shift has been entered. If so, the trainer 140A may be directed by the software operating on the display 111A to simulate a gear shift or to actually engage a physical gear shift if a physical set of gears is present.

The indoor cycle 140B and treadmill 140C operate substantially the same as trainer 140, but the indoor cycle 140B is integrated into the setup 110B and the treadmill 140C alters speed and incline, but not resistance, but otherwise operates in a similar manner to the trainer 140A in setup 110A.

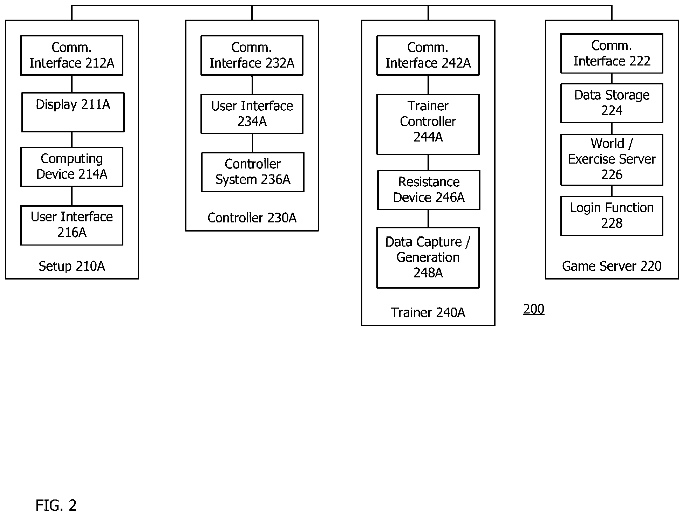

FIG. 2 is a functional diagram of an exercise device communications system 200. The system 200 includes one of the setups, setup 210A, game server 220, controller 230A, and trainer 240A. The other two setups 110B and 110C would operate similarly to those described in FIG. 2 and will not be described separately here.

The setup 210A includes the display 211A, communications interface 212A, a computing device 214A, and a user interface 216A. The communications interface 212A is a software/hardware interface that enables the setup 210A to communicate with the game server 220, controller 230A and the trainer 240A. The particular hardware and/or protocol used for each communication may be different. So, for example, the controller 230A may communicate with the setup 210A using a short range wireless communications protocol such as Bluetooth^{®}, or may be wired (for example, via USB) or may rely upon a local area wireless network protocol such as 802.11x. Other hardware connectivity options are available as well. However, the same communications protocol may be used over whatever hardware channel or carrier is used.

The communications interface 212A relies upon a modified Bluetooth Generic Attribute (GATT) profile. The Service UUID (universally unique identifier) for the new protocol described herein is 00000001-19CA-4651-86E5-FA29DCDD09D1. It is beneficial over existing options such as FTMS (Fitness Machine Service) protocol in including more expandability, greater options for back-and-fort communications, and being more secure, while also lowering overall bandwidth usage. A GATT profile identifies a particular Bluetooth communication transport protocol. If two devices interact that share a GATT profile, then they are able to communicate using that profile once it has been identified and a handshake process has completed.

The new protocol described in this disclosure is configured as a GATT Primary Service having three channels for communication: an asynchronous channel, a synchronous receive (RX) channel and a synchronous transmit (TX) channel. The asynchronous channel is primarily used for notification and therefore uses the NOTIFY property of the Bluetooth GATT profile. The asynchronous channel does not confirm receipt of any data sent using the channel and the data is sent in a stream on an as-needed basis. The RX channel uses the WRITE property of GATT Bluetooth and the RX channel uses the INDICATE property of GATT Bluetooth. These two channels rely upon sending data and expecting confirmations of receipt. Accordingly, only data which requires confirmation is sent using one of these wo channels. This protocol is defined in detail by Appendix A, attached hereto and incorporated by reference in its entirety. For purposes of this disclosure, no matter the hardware connection methodology or the bearer packet, the protocol described herein will be formed as set forth above and in Appendix A.

The Primary Service above may be characterized:

| **Name** | **16-bit UUID** | **Mandatory Properties** | **Optional Properties** | **Security** | **Maximum Length** |
|---|---|---|---|---|---|
| Async | 0x0002 | NOTIFY | - | None | 128 |
| Sync RX | 0x0003 | WRITE | - | None | 128 |
| Sync TX | 0x0004 | INDICATE | - | None | 128 |

The simultaneous use of the RX, TX and asynchronous channels enables messages that require no response to simply be "streamed" from the server to the client via the asynchronous channel. In this way, the client need not confirm receipt as is typical with TCP/IP communications or with usual Bluetooth low energy. The types of messages sent on the asynchronous channel may be low-priority or may be repeated or altered frequently enough that confirmation is not required. As a result, energy is conserved by not handling all of the back-and-forth control messages for this type of communication. Simultaneously, the RX and TX channels can be used for data or information or notifications that must be acknowledged and typically must result in some change in the client and/or server. These operate in a much more traditional manner in this context, but are utilized only for critical communications between the client and/or server.

The three channels, RX, TX, and asynchronous, are capable of simultaneous engagement and operation such that data may be sent and/or received on any one or all of the three of the channels simultaneously or substantially simultaneously with one another . In practice, the channels may never be used exactly at the same time as one another. However, they will each be used throughout a connection between a server device and a client device to send and/or receive messages of the respective types identified herein for each channel. This configuration may entail having each of those channels available for use at the same time - e.g. simultaneously or substantially simultaneously with one another. As such, each of these channels may be configured to be open for simultaneous communication As used herein, the phrase "substantially simultaneously" means taking place within 1000 milliseconds of each other.

The packet format for when Bluetooth^{®} is used to carry the protocol is:

| **Protocol Opcode** | **Protocol Message PDU** |
|---|---|
| 1 Byte | 0 to (BLUETOOTH_MAX_PACKET_LENGTH - 1) bytes |

Where BLUETOOTH_MAX_PACKET_LENGTH is defined as 240.

The packet format for when USB composite device class (CDC) is used to carry the protocol is:

| **Data Length** | **Opcode** | **Protocol Message PDU** |
|---|---|---|
| 1 Byte | 1 Byte | 0 to (USB_MAX_PACKET_LENGTH - 2) bytes |

Where USB_MAX_PACKET_LENGTH is defined as 128.

The packet format for when USB iAP2 (iPod Accessory Protocol 2) (e.g. for use with iPhones and iPads) is used to carry the protocol is:

| **Data Length** | **Opcode** | **Protocol Message PDU** |
|---|---|---|
| 1 Byte | 1 Byte | 0 to (USB_MAX_PACKET_LENGTH - 1) bytes |

Where USB_MAX _PACKET_LENGTH is defined as 128.

The packet format for when internet protocol (IP) (e.g. for use with ethernet, or 802.11x wireless) is used to carry the protocol is:

| **Data Length** | **Opcode** | **Protocol Message PDU** |
|---|---|---|
| 1 Byte | 1 Byte | 0 to (IP_MAX_PACKET_LENGTH - 2) bytes |

Where IP_MAX _PACKET_LENGTH is defined as 128.

The display 211A is described above. Display 211A is primarily to display to a user the ongoing training session or game.

The computing device 214A is preferably a part of display 211A, but in whatever case is in communications with display 211A to provide the ongoing training session or game. The computing device generates a user interface 216A on the display 211A (in the case of a touch-screen) or through other input methods and systems (e.g. buttons, controllers, remote controls, etc.) for the setup 110A.

The game server 220 is a computing device executing software that allows the game server 220 to operate as a communications interface 222, a data storage 224, a world/exercise server 226, and to provide a login function 228.

The communications interface 222 is substantially the same as that described with respect to element 212A above. However, the game server 220 will almost certainly communicate through one or more ethernet cables to an internet pipeline with connectivity to multiple setups, like setup 210A. The data sent and received by the game server 220 using the communications interface 222 is less voluminous than that sent between a setup 210A and controller 230A and trainer 240A, so the communications interface 222 may rely upon traditional TCP/IP datagrams and associated services to communicate with the computing device 214A for a given setup 210A.

The data storage 224 may store such information as the game world environments, textures, and training sessions or competitions to take place in the game world. The data storage 224 may store information about each user (e.g. accomplishments, personal records, etc.) and any competition outcomes involving any users.

The world / exercise server 226 is software operating on a computing device that serves to allow a plurality of setups, like setup 210A, to connect to the game server 220 and engage with the world and engage in exercise. This may be a streaming server of streamed pre-recorded classes for a spinning or running or weight training class. This may be a virtual world to which players connect to use avatars within the game world to move within while engaged in exercise. Various forms of this world / exercise server 226 may be envisioned.

The login function 228 may use the data storage 224 to store authentication information suitable to ensure security of the game server 220 and to ensure that setups, like setup 210A, that connect to the game server 220 have paid an associated membership fee and are otherwise authorized to access the game server 220. The login function 228 may ensure that users are authenticated and are able to access the game server 220.

The controller 230A includes a communications interface 232A, a user interface 234A, and a controller system-on-a-chip 236A. The communications interface 242A operates substantially the same as communications interface 212A. However, preferably, the communications interface 232A of the controller 230A acts as a Bluetooth low energy server reliant upon the GATT profile which defines the protocol disclosed herein (referred to herein as a "GATT server"), while the communications interface 212A of the setup 210A operates as the counterpart (referred to herein as a "GATT client") client. The controller may communicate with software executing on the computing device 214A to implement the communications interface 212A to control various functions, including functions of the trainer 240A. Notably, the controller 230A generally does not communicate directly with the trainer 240A.

The user interface 234A of the controller 230 may be one or more buttons, joy sticks, analog sticks, triggers, motion controls, touchscreen display control implemented in software, or other controls implemented on the controller 230A. In a preferred embodiment, the controller 230 is one or more video game system-like controllers used to engage in specific functions with respect to the game or other software operating on the computing device 214A of the setup 210A. The controller may take the form of a traditional brake lever for a bicycle and/or a traditional gear shift lever, ratchet, or trigger, which may be translated into digital signals transmitted over the communications interfaces 232A, 212A to cause the computing device 214A to instruct the trainer 240A to operate accordingly.

The controller system236A is a computing device (FIG. 2) responsible for operating as a GATT server and instructing the communications interface 232A what signals to transmit to the setup 210A. In more complex systems, the SoC 236A may perform other functions such as rendering a display, translating touch contact, detecting and interpreting motion of the controller 230A or the like.

The trainer 240A includes a communications interface 242A, a trainer system-on-a-chip 244A, a resistance device 246A, and data capture / generation 248A. The communications interface 242A performs substantially the same function as the communications interface 232A of the controller 230A. As with the controller 230A, the trainer 240A communications interface 242A generally does not communicate directly with any other device except the associated setup 210A communications interface 212A.

The trainer controller 244A is a computing device that operates to intelligently control the trainer 240A as directed by software operating on the setup 210A. The trainer SoC 244A also enables the protocol to be transmitted and received via the communications interface 242A.

The resistance device 246A is a device to add resistance (or negative resistance) to a moving object (e.g. a wheel or axle). The resistance device 246A is described as a "resistance" device, but could merely add speed or simulate weight in the case of pulley-based, weight training. There exist other resistance devices such as air or water resistance (e.g. used in rowing machines), but for a number of reasons eddy current brake is typically the chosen resistance device 246A no matter the type of exercise being simulated.

The data capture / generation 248A may be a part of the trainer SoC 244A, but in general is functions designed to capture the data associated with the ongoing exercise and to send that data (using the communications interface 242A) back to the setup 210A for eventual transmission to the game server 220 to update the game and/or race and/or training session. The types of data captured may be speed, cadence relative to the applied resistance, the amount of force by the user, or similar information. Associated sensors may be used (e.g. force sensors) or the data may be calculated from available variables (e.g. force, speed, cadence, etc.).

Turning now to FIG. 3, a block diagram of a computing device 300 is shown. The computing device 300 may be representative of the server computers, client devices, mobile devices and other computing devices discussed herein. The computing device 300 may include software and/or hardware for providing functionality and features described herein. The computing device 300 may therefore include one or more of: logic arrays, memories, analog circuits, digital circuits, software, firmware and processors. The hardware and firmware components of the computing device 300 may include various specialized units, circuits, software and interfaces for providing the functionality and features described herein.

The computing device 300 may have a processor 310 coupled to a memory 312, storage 314, a network interface 316 and an I/O interface 318. The processor 310 may be or include one or more microprocessors and application specific integrated circuits (ASICs).

The memory 312 may be or include RAM, ROM, DRAM, SRAM and MRAM, and may include firmware, such as static data or fixed instructions, BIOS, system functions, configuration data, and other routines used during the operation of the computing device 300 and processor 310. The memory 312 also provides a storage area for data and instructions associated with applications and data handled by the processor 310. As used herein, the word memory specifically excludes transitory medium such as signals and propagating waveforms.

The storage 314 may provide non-volatile, bulk or long-term storage of data or instructions in the computing device 300. The storage 314 may take the form of a disk, tape, CD, DVD, SSD, or other reasonably high capacity addressable or serial storage medium. Multiple storage devices may be provided or available to the computing device 300. Some of these storage devices may be external to the computing device 300, such as network storage or cloud-based storage. As used herein, the word storage specifically excludes transitory medium such as signals and propagating waveforms.

The network interface 316 is responsible for communications with external devices using wired and wireless connections reliant upon protocols such as 802.11x, Bluetooth^{®}, Ethernet, satellite communications, and other protocols. The network interface 316 may be or include the internet.

The I/O interface 318 may be or include one or more busses or interfaces for communicating with computer peripherals such as mice, keyboards, cameras, displays, microphones, and the like.

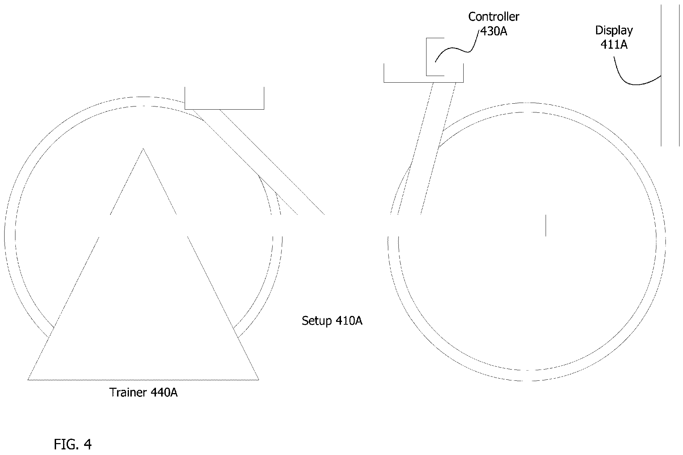

FIG. 4 is an example of an exercise device setup 410A which may be the setup 110A or 210A. The setup 410A includes a display 411A, a controller 430A, and a trainer 440A. Setups B and C (shown in FIG. 1) are not discussed with reference to FIG. 4 as their functions are not substantially distinct therefrom). The display 411A is shown in front of a rider. The controller 430A may be, for example, attached to the handlebars of the setup 410A. Though shown as a brake or shift controller, the controller 430A may take different forms in different exercises or setups. And, though discussed as a "controller" the same communications protocols may be used with other devices that operate in some sense as a "controller" but may not take that form. For example, the same devices that provide a tilt function for bicycles or treadmills to simulate uphill or downhill rides/runs may in some sense be a "controller" as discussed herein in the sense that they communicate with the computing device 214A of the setup 210A in the same way as a controller, using the same protocols. Automatically controlled fans, side-to-side lean hardware, and other, similar hardware may likewise be a "controller," as disclosed herein, reliant on the same communications protocol.

The trainer 440A is a trainer as discussed above. The trainer 440A may likewise rely upon the same communications protocol described herein.

FIG. 5 is an example of a handheld controller 530A pair. Here, the controller is designed to sit on handlebars of a bicycle and to provide triggers on the back of the controller, with a traditional "d-pad" controller on the front/top of the controller. Controllers of various forms may be used without departing from the intended scope of the communications protocol used herein or the relay-like functionality of ensuring that the controller 530A communicates with the software operating the game world on the setup 410A, rather than directly with, for example, the trainer 440A.

### Description of Processes

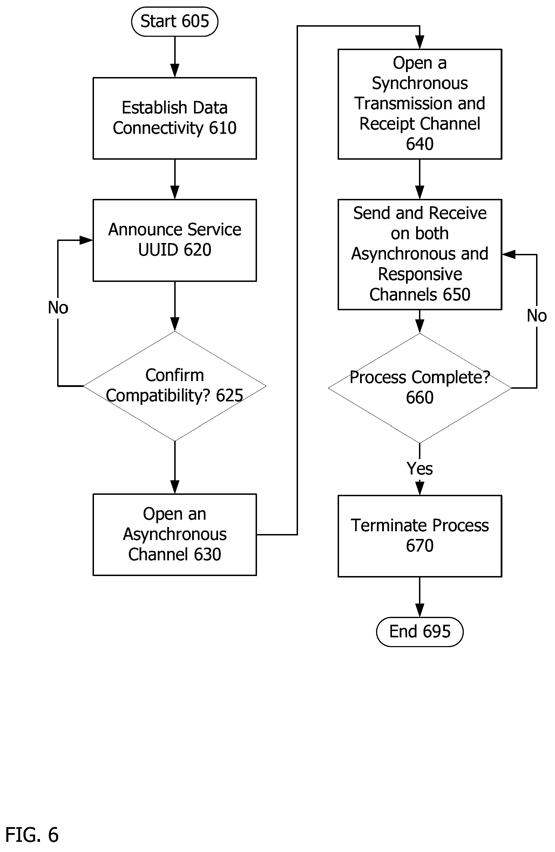

FIG. 6 is flowchart of a process of communication using a communications protocol. The process begins at 605 and ends at 695. The process takes place for each communications device reliant upon the protocol and ends when the device is disconnected or the process terminates.

Following the start 605, the process begins with establishment of connectivity at 610. Here, the transport layer is allocated and connected by both the client and the server. In a typical case, the controller device will operate as the server and the computing device of the setup (e.g. setup 210A of FIG. 2) will operate as the client for this protocol. This step is merely to establish the transport bearer for the protocol to communicate.

Thereafter, the UUID is announced by the server at 620. Here, the server announces its availability to serve as a server for the protocol and searches for compatible responses from available clients. If no suitable response is received ("no" at 625), then the process continues with ongoing announcements.

If a suitable response indicating compatibility is received ("yes" at 625), then the process continues with the opening of the asynchronous channel at 630. This channel is used for data that is simply sent in a stream to the client. This data is typically from a device operating as a control device for the world and/or other attached devices (e.g. trainers). The important characteristic of this channel is that notifications sent on this channel require no response from the client. Examples of such communications include: notifications from the exercise device, notifications from the software to the exercise device, event flagging messages, notifications from a controller device, notifications from a battery device, notifications indicating wireless internet status, lighting and sound effect event status notifications, intermediate game state events, notifications from a secondary controller device, notifications related to a battery status of a secondary exercise device, notifications that the secondary exercise device has paired with the software, notifications that the exercise device or the secondary exercise device has engaged a virtual gear shift process in software, notification regarding a spindown of the exercise device or a secondary exercise device, and notification that the software has lost control over the exercise device or secondary exercise device.

Next, a synchronous transmission (TX) channel and a synchronous receipt (RX) channel are opened at 640. The transmission (TX) channel is setup on the client device. the receipt (RX) channel is setup on the server device to receive notifications from the client device(s). These two channels operate in a mode wherein an acknowledgement is expected in the general form of an ACK/NACK or other response indicating or confirming receipt of the message. This is unlike the asynchronous channel where no response is expected. This is typically because receipt of or response to the data is not necessary for ongoing operation of a device to which the message of this type is sent.

The TX channel is used for the server to respond to a connected client. Examples of TX channel responses include: a setting for the server device set by the software, a setting for the software or for the exercise device to operate, a request to have the server device operate as a bridge between the software and a third device, a request to have the server device power off, a calibration setting for a touch surface controlled by the server device, a calibration setting for the server device or an exercise device, a request to reset the server device, a request to cause a lighting element to have a selected setting, animation, or status, a request to set a setting for the exercise device, a request to set one or more settings for the exercise device, and a request to begin a spindown of the exercise device.

The RX channel is used to receive messages from a connected client. Examples of RX channel requests include: a notification regarding development information or status from the software, a notification regarding a configuration of the exercise device, a status of an ongoing data transfer from the server device to the client device, a notification of the status of lighting elements controlled by the exercise device, a notification on the diagnostic status of the exercise device, a notification of the status of a battery associated with the exercise device, a notification of a version of the exercise device, a notification regarding the SSID of a wireless network, a notification of a version of a secondary exercise device, a notification regarding an error in lighting elements controlled by the exercise device, a notification regarding the status of a setting of the exercise device or the secondary exercise device, a notification regarding a touch surface associated with the exercise device or the secondary exercise device, a notification regarding an updating status for firmware updates to the exercise device or the secondary exercise device, notifications from a log associated with the exercise device or the secondary exercise device, notifications indicating a fault with the exercise device or the secondary exercise device, notification regarding a calibration or calibration status for the exercise device or the secondary exercise device, notifications indicating that a firmware update has completed and is now locked, notifications related to information for the secondary exercise device, notifications identifying a particular version of the secondary exercise device, and notifications indicating that the three-part communication connection is supported by the server device.

The process continues with both channel types being open on all three channels. So, sending messages takes place on the asynchronous channel\ while sending and receiving messages on the RX and TX channels takes place at 650. These communications continue while the exercise device (e.g. a controller) is connected to the computing device.

If the process continues ("no" at 660), meaning that the exercise is ongoing or the device remains connected, then the channels remain open and transmitting and receiving.

If the process is complete ("yes" at 660), then the process is terminated at 670. Here the device maybe disconnected, or all devices may be powered off. Or the exercise may complete and the controller may disconnect to conserve power.

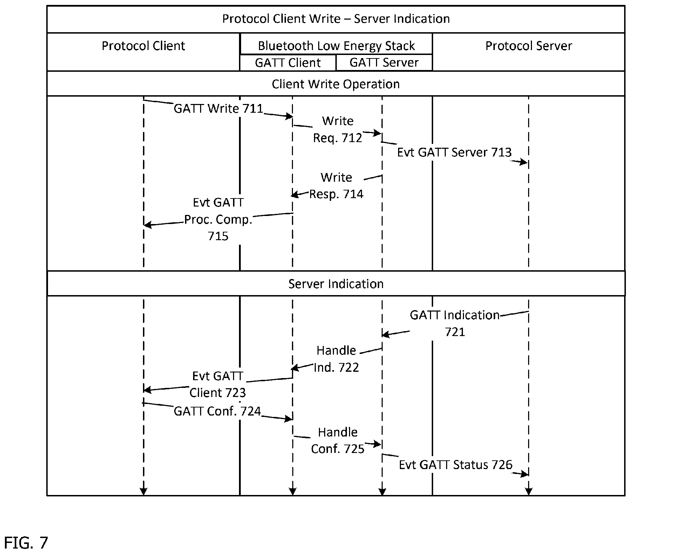

FIG. 7 is a process flow for a communications protocol of a client write and a server indication. FIG. 7 includes two different examples of acknowledged communications. First, a client write operation is shown, beginning with a client requesting a GATT write at 711. The write request is encapsulated using the Bluetooth^{®} low energy typical communication stack and a write operation is requested at 712. This is the client device (e.g. the software running Zwift) writing to the server (e.g. a controller device or potentially a trainer device). The GATT write 712 is received and the server determines that it is a GATT write event 713 which then completes the write. This data may be the software instructing the controller on a data setting or calibration setting, for example.

Then, the GATT write response 714 is sent by the Bluetooth low energy stack at 714. This is an acknowledgement of the requested write by the client. The client then receives the event indicating that the GATT process is complete at 715. The portions outside the Bluetooth low energy stack are defined by the negotiated GATT. The portions inside the Bluetooth low energy stack are merely the transport layer packaging the GATT operations communications for transmission and receipt. This process relies upon the RX acknowledged channel.

The next example operation is a server indication. Here, the server (e.g. a controller) is providing a data element to the client (e.g. the software) using the protocol. First, a GATT indication is sent through the Bluetooth low energy stack at 721. The GATT handle indication is sent at 722. At the client (e.g. the software), the GATT event is provided to the client at 723. This may be, for example, an indication of a button press or a data element (e.g. a calibration setting). The GATT expected confirmation is sent at 724 for handling through the Bluetooth low energy stack. This confirms that the GATT event, one requiring confirmation, is now completed by the client. This GATT handle confirmation by the Bluetooth low energy stack and is transmitted to the server at 725. Then, the expected GATT event status is received at 726, confirming that the indication has been received and need not be sent a second time. This process relies upon the TX acknowledged channel.

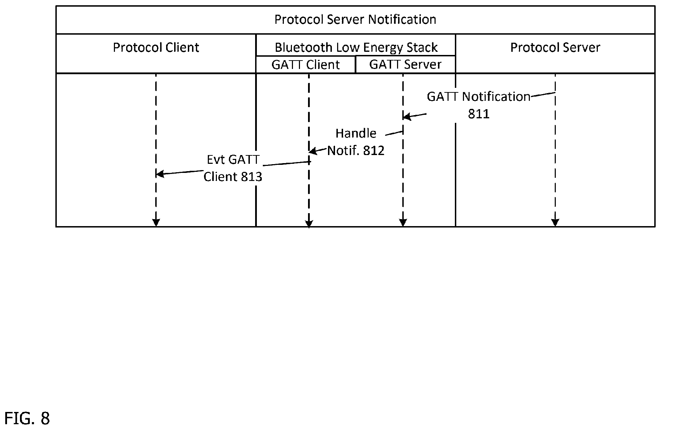

FIG. 8 is a process flow for a communications protocol of a server notification. This is in contrast to the RX and TX channel usage above in FIG. 7 and relies only upon the asynchronous channel. Here, this is merely a notification and, in general, a notification is low enough priority and merely useful information rather than critical information, that it may be streamed and need not be acknowledged.

Here, a GATT notification is sent by the server (e.g. a controller or trainer) at 811. The notification may be a button press on a controller or a change in speed of a trainer or bicycle. The GATT handle notification is handed to the Bluetooth low energy stack for transmission which is at 812. The message is thereby transmitted from server to client. Then, the client's receipt of the expected GATT event is handled by the client at 813. If the message is received (likely), then the process continues with that new data. If it is not received (unlikely), then the client continues operating as it was before without that message. The message can be re-sent later or may merely be repeated when the event happens yet again. In either case, the message is not acknowledged by the client.

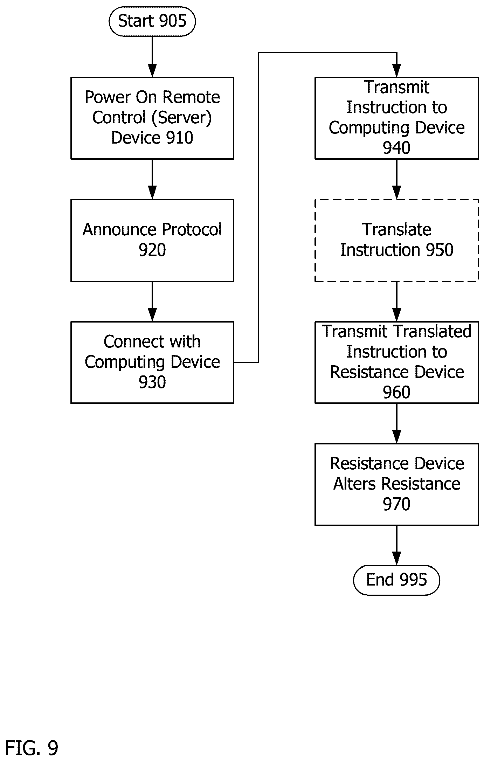

FIG. 9 is a flowchart of a process of communications in an exercise device communications system. The process begins at 905 and ends at 995. This is the generalized process of connection to and use of a control device in conjunction with software. This may be used, for example, in the context of a controller device (or other exercise device) used in connection with a simulated environment such as with Zwift. Preferably, the system relies upon the protocol for communication described above and in Appendix A.

Following the state at 905, the process begins with powering on the remote control (e.g. the server) device at 910. The control includes embedded firmware setting forth its capabilities and its operation, and describing the protocols used for communication with client devices like the software.

Next, the protocol for communications is announced at 920. Here, the server device may continuously and repeatedly announce its protocol(s) used for communication. This enables compatible client devices to discover the server.

Once discovered by the client (e.g. software), the server device is connected to the computing device operating as the client at 930. Here, the controller negotiates the transport bearer (e.g. Bluetooth low energy, USB, 802.11x wireless, or some other connection), then negotiates connection using the protocol. This process may also involve the opening of the TX, RX, and asynchronous channels discussed above.

Once that process is complete, the client and server communications have been set up and the channels may be used for communications.

The server (e.g. a controller) can transmit an instruction for a third device (e.g. a trainer) connected to the computing device (e.g. software operating as a client) at 940. This process may be an indication of a desired reduction or increase in resistance or speed, an instruction to undertake a virtual "gear shift" or a virtual "brake" operation whereby the trainer simulates a change in gear or brake, or may be a request to "steer" the virtual bike or treadmill or an avatar within the virtual world. This instruction is sent by the controller (e.g. server) to the computing device (e.g. software operating on the display 111A).

In the past, many systems with controllers have relied upon the trainer itself or the indoor cycle or the treadmill to operate as the primary hub. Here, however, it is desirable for the computing device - the device operating the associated software for a virtual game world or upon which classes are being offered or streamed - to operate as a hub for all devices to connect. The protocol (Appendix A) may be used for communications with these devices, which each device (e.g. each trainer, each indoor cycle, each trainer, each controller, each "lean" or "tilt" device, and any other fitness-related devices used with the software) connecting to the central computing device operating as the client.

At 940, the instruction may be to "shift gears" virtually and the software is so instructed to do so. That instruction may be transmitted using the protocol described above. That instruction may or may not be suitably formatted for subsequent transmission to a connected trainer device (e.g. a resistance device) to enable appropriate operation.

In such a case, the instruction optionally may be translated at 950 by the computing device (e.g. the software operating on the computing device) to conform to a format desired by the trainer. There are tens of trainers available in the world, there are hundreds of indoor cycles and treadmills. These types of instructions may require formatting to appropriately be transmitted from the receiving client (e.g. the software operating on the computing device) to a second server device operating on the trainer, indoor cycle, treadmill, etc.

The instruction may then be transmitted to the resistance device at 960. As indicated above, the "resistance" device may in fact be a treadmill which merely alters speed, and not resistance. But, in general, this will be the trainer or weight resistance cable system that is being instructed by the controller, through the computing device.

There are various ways in which the instruction may be transmitted to the resistance device at 960. The instruction may be an instruction to apply a selected one of: a numerical resistance to be applied by the resistance device, a percentage reduction or increase in resistance to be applied by the resistance device, a numerical reduction or increase in resistance to be applied by the resistance device, a series of numerical resistances to be applied by the resistance device, or a waveform or portion thereof describing a variable resistance over a period of time to be applied by the resistance device. The instruction may be a selected one of: an indication of a particular gear selection to which to transition the resistance device, an indication of either a desire to shift up or down one gear from a presently-selected gear selection by the resistance device, a request to apply a selected amount of braking force by the resistance device, or a request to apply a selected intermittent signal, embodying a simulated road surface, by the resistance device. The signal may merely be to increase resistance or reduce it, to steer, to move between selections, to move a device (e.g. a setup) up and down or elevate one end or another of a setup. The instruction may be a selected one of: an indication of a particular gear selection to which to transition the resistance device and an indication of either a desire to shift up or down one gear from one gear presently in use by the resistance device to another gear.

Thereafter, the resistance device may alter the resistance at 970 (or the speed, in the case of a treadmill). At this step, the "controller" is controlling the trainer or treadmill, but the central hub is the computing device operating the software. In this way, the software may know the current state of all of the connected devices (e.g. controllers, trainers, inclines or lean-capable accessories, treadmills, weights, etc.). And, the communications protocol may be made more secure for purposes of competitive racing and ensuring uniformity. The overall systems may also be made more uniform, reliant upon a new standardized protocol for the various pieces of information passed back and forth during a training or race session.

The process may then end at 995.

### Closing Comments

Throughout this description, the embodiments and examples shown should be considered as exemplars, rather than limitations on the apparatus and procedures disclosed or claimed. Although many of the examples presented herein involve specific combinations of method acts or system elements, it should be understood that those acts and those elements may be combined in other ways to accomplish the same objectives. With regard to flowcharts, additional and fewer steps may be taken, and the steps as shown may be combined or further refined to achieve the methods described herein. Acts, elements and features discussed only in connection with one embodiment are not intended to be excluded from a similar role in other embodiments.

As used herein, "plurality" means two or more. As used herein, a "set" of items may include one or more of such items. As used herein, whether in the written description or the claims, the terms "comprising", "including", "carrying", "having", "containing", "involving", and the like are to be understood to be open-ended, i.e., to mean including but not limited to. Only the transitional phrases "consisting of" and "consisting essentially of", respectively, are closed or semi-closed transitional phrases with respect to claims. Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements. As used herein, "and/or" means that the listed items are alternatives, but the alternatives also include any combination of the listed items

### APPENDIX A

### Zwift Application Protocol

### Document Revision History

| Revision Number | Change Description | |
|---|---|---|
| 1.0 | Updated scaling factors for trainer data | |
| | Updated data field size for Simulated CW and Simulated CRR | |
| 1.1 | Updated naming for Zwift Click device | |
| 1.2 | Updated trainer notification payload: | |
| | | - Optional field for calculated Real Gear Ratio |

### Table of Contents

| | | |
|---|---|---|
| **1.** | **INTRODUCTION** | **3** |
| **2.** | **ACRONYMS** | **4** |
| **3.** | **OVERVIEW** | **5** |
| **4.** | **CONSTANTS** | **6** |
| **5.** | **TRANSPORTS** | **7** |
| **6.** | **DATA OBJECTS** | **14** |
| **7.** | **MESSAGES** | **24** |
| **8.** | **BEHAVIOUR -ZAP SERVER** | **42** |
| **9.** | **BEHAVIOUR - ZAP CLIENT** | **43** |
| **10.** | **SECURITY** | **44** |
| **11.** | **MESSAGE SEQUENCE CHARTS** | **46** |
| **12.** | **REFERENCES** | **48** |
| **ANNEX A.** | **TEST OR UNUSED MESSAGES** | **49** |
| **ANNEX B.** | **TEST OR UNUSED BEHAVIOURS** | **64** |

### 1.Introduction

This document specifies the Zwift Application Protocol **(ZAP).** ZAP is a client-server protocol that transports fitness, control and lightning data between the Zwift Game Client and the Zwift Hardware products via any supported transport.

### 2.Acronyms

**Table 2-1: Acronyms**

| **Acronym** | **Description** |
|---|---|
| AP | Access Point (Wi-Fi) |
| ZAP | Zwift Application Protocol |
| ZCS | Zwift Custom Service (Bluetooth) |
| PDU | Protocol Data Unit |
| TCP | Transmission Control Protocol |
| USB | Universal Serial Bus |
| CDC | Communication Device Class (USB) |

### 3.Overview

The protocol defines a ZAP Client and a ZAP Server. The ZAP Client shall be implemented on a device running the Zwift Game or Zwift Companion. The ZAP Server shall be implemented on any Zwift Hardware products implementing proprietary features.

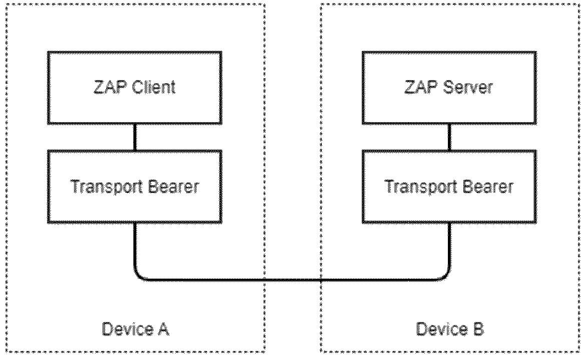

### 4.Constants

**Table 4-1: ZAP Constants**

| **Constant name** | **Value** |
|---|---|
| BLUETOOTH_MAX_PACKET_LENGTH | 240 |
| USB_MAX_PACKET_LENGTH | 128 |
| IP_MAX_PACKET_LENGTH | 128 |
| VID | 0x3348 |
| PID | varies by product |
| RIDE_ON_RETRY_SEC | 2 |
| WIFI_TRANSPORT_TCP_PORT | 3020 |
| BRIDGE_MAX_DEVICE_CAPACITY | 5 |

### 5.Transports

The protocol shall run on a reliable transport bearer (any transport having a mechanism to detect and re-send missing packets).

The Transport Bearer shall not simultaneously transport other messages than those defined by this specification.

The Transport Bearer shall implement an error detection mechanism, such as a CRC.

The Transport Bearer is considered established when one of these conditions are satisfied:
- The USB enumeration is done, and the CDC interface is selected on USB CDC (USB on PC, Mac, Android)
- The External Accessory is connected (USB on iOS devices)
- Zwift Custom Service (ZCS) is discovered and configured (Bluetooth)
- a TCP/IP session is established over Wi-Fi on port WIFI_TRANSPORT_TCP_PORT.

### 5.1. Bluetooth Transport Bearer

### 5.1.1. Zwift Custom Service

The Zwift Custom Service (ZCS) implements a custom Bluetooth GATT-based service that implements the characteristics required to transport ZAP messages between the client and the server.

### 5.1.1.1. Service

The full Service UUID is **00000001-19CA-4651-86E5-FA29DCDD09D1.**

ZCS is configured as Primary Service.

**Table 5-1: ZCS Characteristics**

| **Name** | **16-bit UUID** | **Mandatory Properties** | **Optional Properties** | **Security** | **Maximum Length** |
|---|---|---|---|---|---|
| Async | 0x0002 | NOTIFY | - | None | 128 |
| Sync RX | 0x0003 | WRITE | - | None | 128 |
| Sync TX | 0x0004 | INDICATE | - | None | 128 |

### 5.1.1.2. Async Characteristic

This characteristic is used to notify the connected Client about streaming data, or anything autonomously generated from the device.

The Service UUID will use **0x0002** value for 12th and 13th octet on the base UUID.

The full UUID is **00000002-19CA-4651-86E5-FA29DCDD09D1.**

### 5.1.1.3. Sync RX Characteristic

This characteristic is used to receive messages from the connected Client.

The full UUID is **00000003-19CA-4651-86E5-FA29DCDD09D1.**

### 5.1.1.4. Sync TX Characteristic

This characteristic is used to respond to request from the connected Client.

The Service UUID will use **0x0004** value for 12th and 13th octet on the base UUID.

The full UUID is **00000004-19CA-4651-86E5-FA29DCDD09D1.**

### 5.1.2. Setup

The Zwift Client shall implement a Zwift Custom Service **(ZCS)** GATT Client.

The Zwift Server shall implement a Zwift Custom Service **(ZCS)** GATT Server.

The Transport Bearer shall support sending packets of BLUETOOTH_MAX_PACKET_LENGTH bytes length.

The Transport Bearer is considered established between the ZAP Client and the ZAP Server when all the following conditions are satisfied:
- The ZAP Client discovered the ZCS on the ZAP Server
- The ZAP Client configured receival of notifications and indications from **Async** and **Sync Tx** characteristics

### 5.1.3. Tear Down

The transport is torn down on the physical disconnect of the Bluetooth link or when the receival of notifications or indications is disabled.

### 5.1.4. Packet Format

The Protocol Data Unit (PDU) of the Transport Bearer shall be formatted as below:

**Table 5-2: Bluetooth Transport PDU**

| **ZAP Opcode** | **ZAP Message PDU** |
|---|---|
| 1 Byte | 0 to (BLUETOOTH_MAX_PACKET_LENGTH - 1) bytes |

### 5.1.5. Receiving and transmitting data

Ble standard provide four basic operations for moving data in BLE: read, write, notify, and indicate.

When client needs to send data to the server, use write. If the client needs to get data from the server on-demand (i.e. polling), use read (There are no zap message design that use the read).

If the server needs to send data to the client without the client requesting it first, use notify or indicate. (The client must subscribe to these updates before any data will be transferred).

The server cannot pull data from the client directly. If this is necessary, the server must use notify or indicate to send pre-arranged request data to the client, and then the client may follow up with a write operation to send back whatever data that the server needs (There are no zap message design that use the read).

The sequence diagram below shows all the cases designed for ZAP messages using the Zwift Custom Service (ZCS) which implements a custom Bluetooth GATT-based service.

### 5.1.5.1. Write and Indicate

The diagram show the sequence where the server try to retrieve information from the client. This is the typical scenario of a Get(0x00) operation.

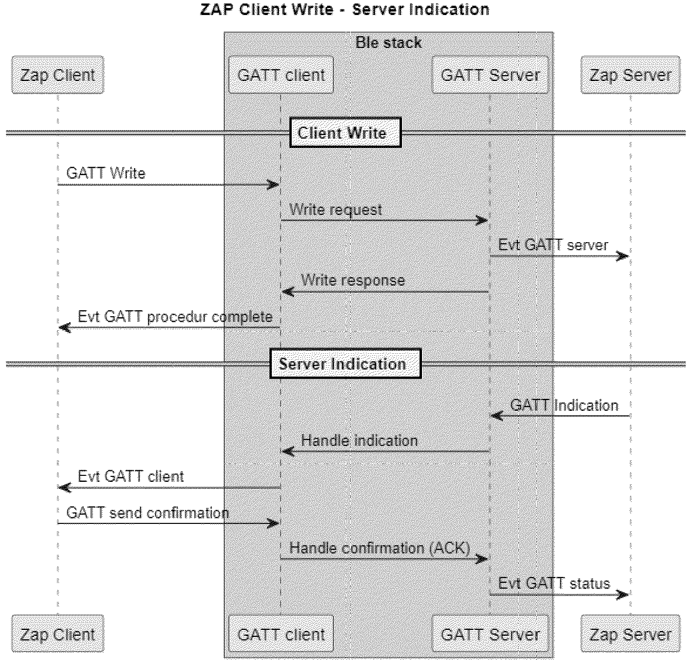

### 5.1.5.2. Notification

The diagram show the sequence where the client notify the server data. This is the typical scenario of ZWIFT_PLAY_NOTIFICATION (0x07).

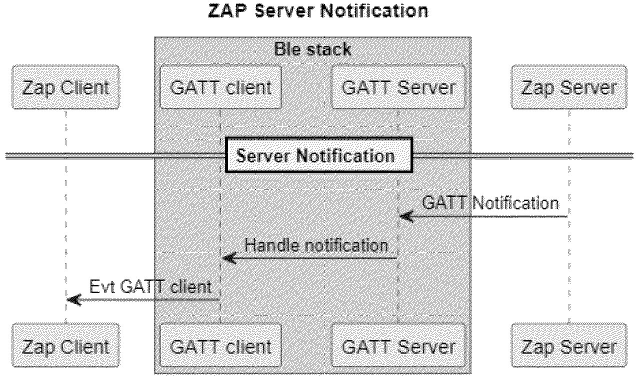

### 5.2. USB CDC Transport Bearer

### 5.2.1. Setup

The Zwift Client shall implement a USB Host interface. The Zwift Server shall implement a USB Device interface that exposes the USB CDC Class.

The Transport Bearer is considered established between the ZAP Client and the ZAP Server when all the following conditions are satisfied:
- The ZAP Client enumerated the CDC endpoints (usually done by the USB driver)
- The ZAP Client discovered the serial port with the Zwift Vendor Identifier (VID).

The ZAP Client shall also detect the product type by reading the Product ID field (PID), which is usually present alongside the VID.

The Transport Bearer shall support sending packets of USB_MAX_PACKET_LENGTH bytes length.

### 5.2.2. Tear Down

The transport is torn down on the physical disconnect of the USB port.

**Note:** any driver issues on the Host side may achieve the same result.

### 5.2.3. Packet Format

The Protocol Data Unit (PDU) of the Transport Bearer shall be formatted as below:

**Table 5-3: USB CDC Transport PDU**

| **Data Length** | **Opcode** | **ZAP Message PDU** |
|---|---|---|
| 1 Byte | 1 Byte | 0 to (USB_MAX_PACKET_LENGTH - 2) bytes |

The Data Length field shall contain the length of the Opcode and the ZAP Message PDU.

### 5.3. USB iAP2 Transport Bearer

### 5.3.1. Setup

The Zwift Client is an iOS device and shall implement a USB Host interface.

The Zwift Server shall implement a USB Device interface that exposes the USB iAP2 endpoints.

The Transport Bearer shall support sending packets of USB_MAX_PACKET_LENGTH bytes length.

The Transport Bearer is considered established between the ZAP Client and the ZAP Server when all the following conditions are satisfied:
- The ZAP Client enumerated the iAP2 endpoints (usually done by the iOS Accessory drivers) and discovered the serial port with the Zwift Vendor Identifier (VID).
- The ZAP Client can also detect the product type by reading the Product ID field (PID), usually present alongside the VID.

### 5.3.2. Tear Down

The transport is torn down on the physical disconnect of the USB port.

### 5.3.3. Packet Format

The Protocol Data Unit (PDU) of the Transport Bearer shall be formatted as below:

**Table 5-4: USB iAP2 Transport PDU**

| **Data Length** | **Opcode** | **ZAP Message PDU** |
|---|---|---|
| 1 Byte | 1 Byte | 0 to (USB_MAX_PACKET_LENGTH - 1) bytes |

### 5.4.IP Transport Bearer

### 5.4.1. Setup

The Zwift Client shall implement a TCP Client and shall be connected on the same local network as the Zwift Server.

The Zwift Server shall implement a TCP Server and shall be connected on the same local network as the Zwift Server.

The Transport Bearer shall support sending packets of IP_MAX_PACKET_LENGTH bytes length.

The Transport Bearer is considered established between the ZAP Client and the ZAP Server when the ZAP Client connected with the ZAP Server on port WIFI_TRANSPORT_TCP_PORT.

Note: Discovery of the ZAP Server IP address by the ZAP Client is out of the scope of this document.

### 5.4.2. Tear Down

The transport is torn down on either:
- closing the TCP connection, or
- disconnecting from the local network

### 5.4.3. Packet Format

The IP Transport PDU of the Transport Bearer is be formatted as below:

**Table 5-5: IP Transport PDU**

| **Data Length** | **Opcode** | **ZAP Message PDU** |
|---|---|---|
| 1 Byte | 1 Byte | 0 to (IP_MAX_PACKET_LENGTH - 2) bytes |

The IP Transport PDU is encapsulated in a TCP packet as shown below. Note that the IP Transport PDU may be fragmented by the TCP protocol in multiple TCP packets.

**Table 5-6: Encapsulation of IP Transport PDU**

| **TCP Header** | **TCP Data** |
|---|---|
| variable | IP Transport PDU |

### 5.4.4. Transmitting the Packet

The packet is transmitted over the TCP connection from the source socket as a data stream.

### 5.4.5. Receiving the Packet

The packet is received over the TCP connection at the destination socket as a data stream.

### 6. Data Objects

The ZAP Server contains state information in the form of Data Objects. Each Data Object is identified by an 8-bit Object Identifier and an 8-bit Page Identifier.

A Page is a collection of Data Objects that can be retrieved in one go by the ZAP Client. Usually, the pages are defined based on a main functionality (example: Device Information, Trainer Configuration). Each page is assigned an 8-bit identifier, called a Page Identifier.

Data Objects can be:
- Read Only (example: Firmware Version) or
- Readable and Writable (example: Resistance)

The Data Objects defined by the Zwift protocol are presented in the table below.

**Table 6-1: ZAP Data Objects**

| **Page Identifier** | **Object Identifier** | **Data Object** | **Length (Bytes)** | **Access** | **Description** | |
|---|---|---|---|---|---|---|
| 0x00 | 0x00 | Device Information Page Primary | variable | RO | Retrieve the full Device Information Page (0x00) | |
| | 0x01 | ZAP Protocol Version | 2 | RO | Protocol Version Implemented by the trainer | |
| | 0x02 | System Firmware Version | 4 | RO | System Firmware Version expressed as an uint32 | |
| | | | | | Format: 0xMMmmpppp, where: M- Major version, m - minor version, p - patch version | |
| | 0x03 | Device Name | 12 | RW | Name of the device | |
| | 0x04 | Not Used | | | | |
| | 0x05 | Serial Number | 15 | RO | Serial number | |
| | 0x06 | System Hardware Revision | Variable [3..5] | RO | System Hardware revision as string of length variable [3..5]. | |
| | | | | | Format: "M.m", where: M- Major version, m - minor version. | |
| 0x01 | 0x00 | Not Used | | | | |
| 0x02 | 0x00 | Trainer Configuration Page | variable | RO | Retrieve the full Trainer Configuration Page | |
| | 0x01 | Trainer Mode | 1 | RW | 1 for ERG | |
| | | | | | 2 for Resistance | |
| | | | | | 3 for SIM | |
| | | | | | 4 for RESET | |
| | 0x02 | Configured Resistance | 2 | RW | Resistance value. | |
| | | | | | Units: N/A | |
| | | | | | Divisor: 1 | |
| | | | | | Expected range: [0, 65535] | |
| | | | | | Default: 0 | |
| | 0x03 | ERG Power | 2 | RW | Power setting in ERG. | |
| | | | | | Units: W | |
| | | | | | Divisor: 1 | |
| | | | | | Expected range: [0, 2200] | |
| | | | | | Default: 0 | |
| | 0x04 | Averaging Window | 2 | RW | Averaging window used to determine Average power. | |
| | | | | | Units: s | |
| | | | | | Divisor: 1000 | |
| | | | | | Expected range: [0.1, 60] | |
| | | | | | Default: 0.992 | |
| | 0x05 | Simulated Wind | 2 | RW | Wind speed in SIM mode. Positive is headwind. | |
| | | | | | Units: m/s | |
| | | | | | Divisor: 100 | |
| | | | | | Expected range: [-20, +20] | |
| | | | | | Default: 0 | |
| | 0x06 | Simulated Grade | 2 | RW | Grade (positive is uphill) | |
| | | | | | Units: % | |
| | | | | | Divisor: 100 | |
| | | | | | Expected range: [-20, +25] | |
| | | | | | Default: 0 | |
| | 0x07 | Real Gear Ratio | 2 | RW | Actual gear ratio from pedal to wheel | |
| | | | | | Units: N/A (1:N ratio from pedal to wheel) | |
| | | | | | Divisor: 10000 | |
| | | | | | Expected range: [0.5, 5] | |
| | | | | | Default: 3 | |
| | 0x08 | Virtual Gear Ratio | 2 | RW | Virtual gear ratio from pedal to wheel (0 = disabled) | |
| | | | | | Units: N/A (1:N ratio from pedal to wheel) | |
| | | | | | Divisor: 10000 | |
| | | | | | Expected range: [0, 5] | |
| | | | | | Default: 0 | |
| | 0x09 | Simulated CW | 2 | RW | Simulated Wind Resistance Coefficient (**proposed format, currently implemented on 1 byte**) | |
| | | | | | Units: Kg/m | |
| | | | | | Divisor: 10000 | |
| | | | | | Expected range: [0, 2] | |
| | | | | | Default: 1 | |
| | 0x0A | Simulated Wheel Diameter | 2 | RW | Diameter of the wheel | |
| | | | | | Units: m | |
| | | | | | Divisor: 10000 | |
| | | | | | Expected range: [0.65, 0.8] | |
| | | | | | Default: 0.678 | |
| | 0x0B | Simulated Bike Mass | 2 | RW | Mass of the bike | |
| | | | | | Units: kg | |
| | | | | | Divisor: 100 | |
| | | | | | Expected range: [0, 20] | |
| | | | | | Default: 9.92 | |
| | 0x0C | Simulated Rider Mass | 2 | RW | Mass of the rider | |
| | | | | | Units: kg | |
| | | | | | Divisor: 100 | |
| | | | | | Expected range: [0, 110] | |
| | | | | | Default: 75 | |
| | 0x0D | Simulated CRR | 2 | RW | Coefficient of rolling resistance of wheels on ground | |
| | | | | | Units: N/A | |
| | | | | | Divisor: 100000 | |
| | | | | | Expected range: [0, 0.01] | |
| | | | | | Default: 0.005 | |
| | 0x0E | Simulated Frontal Area | 2 | RW | Rider+bike frontal area for wind resistance (**Proposed for removal, currently still available**) | |
| | | | | | Units: m² | |
| | | | | | Divisor: 10000 | |
| | | | | | Expected range: [0, 2] | |
| | | | | | Default: 0.5 | |
| | 0x0F | Simulated e-Brake | 2 | RW | Application of e-brake in % | |
| | | | | | Units: % | |
| | | | | | Divisor: 100 | |
| | | | | | Expected range: [0, 100] | |
| | | | | | Default: 0 | |
| 0x0301 | | BLOB Transfer | variable | RO | BLOB ID (uint16) - BLOB Identifier | |
| | | | | | BLOB Size (uint32) - BLOB size in bytes | |
| | | | | | Chunk Size (uint8) - Chunk Size in bytes | |
| | | | | | BLOB Type (uint8) | |
| | | | | | BLOB Downloaded Size (uint32) - Number of bytes already downloaded by the server nextChunkld(uint16) - Unique identifier of the next expected chunk state(enum) - BLOB Transfer state | |
| 0x0302 | | Diagnostic Data | | RO | | |
| 0x0303 | | Battery Status | | RO | | |
| 0x0304 | | Zwift Wheel Versions | 15 | RO | Software components versions on Zwift Wheel. See definition of ZWIFT_WHEEL_VERSIONS message. | |
| 0x0305 | | Wi-Fi Status (network status + SSID) | 33 | RO | Wi-Fi general status, it contains the network status and the SSID. | |
| | | | | | Zap_WifiStatus_ESP32_IF_WIFI_STATUS_INIT = 0 | |
| | | | | | Zap_WifiStatus_ESP32_IF_WIFI_STATUS_PROV_WAIT = 1 | |
| | | | | | Zap _WifiStatus_ESP32_IF_WIFI_STATUS_CONN_WAIT = 2 | |
| | | | | | Zap_WifiStatus_ESP32_IF_WIFI_STATUS_TCP_CONN_WAIT = 3 | |
| | | | | | Zap_WifiStatus_ESP32_IF_WIFI_STATUS_READY = 4 | |
| 0x0306 | | Zwift Play Versions | 11 | RO | Software components versions on Zwift Play. See definition of ZWIFT_PLAY_VERSIONS message. | |
| 0x0307 | | Zwift Frame Versions | 11 | RO | Software components versions on Zwift Frame. See definition of ZWIFT_FRAME_VERSIONS message. | |

| **Page Identifier** | **Object Identifier** | **Data Object** | **Length (Bytes)** | **Access** | **Description** | |
|---|---|---|---|---|---|---|
| 0x0309 | | Zwift Hub Calib | 60 | RW | Retrieve/Write the trainer calibration data. Structure containing: | |
| | | | | | | - Hub Calibration Parameters |
| | | | | | | - Calibration Status (including serial number) |
| | | | | | | - Control Loop Gain |
| | | | | | | - Current Measurement Offset |
| | | | | | | - Electromagnet Off Power measurement |
| 0x030A | | Zwift Click Versions | 11 | RO | Software components versions on Zwift Click device. See definition of ZWIFT_CLICK_VERSIONS message | |
| 0x030B | | Zwift Hub Versions | 11 | RO | Software components version on Zwift Hub. See definition of ZWIFT_HUB_VERSIONS message. | |
| 0x06 | 0x00 | Zwift Play user settings page | variable | RO | | |
| | 0x01 | Haptics Analogue | 3 objects | RW | Each analogue sensor has the following configuration data: | |
| | | | | | | • Priority (priority on haptics to play, LOW PRIORITY = 0, HIGH PRIORITY = 5) |
| | | | | | | • Speed triggered (NO = 0, YES =1) |
| | | | | | | • Waveform Custom (15 bytes buffer with custom waveform samples) |
| | | | | | | • Looping (NO = 0, YES = 1) |
| | | | | | The 3 objects sequence allocation is the following: vertical, horizontal right, horizontal left | |
| | | | | | Waveform Custom values: each byte represent the magnitude of the haptic to play. The byte is unsigned: 0 is the min value and 127 is the max, the second half of the byte is mirrored, where 127 is the max and 255 is the min. | |
| | 0x02 | Haptics Button | 1 objects | RW | Each button has the following configuration data: | |
| | | | | | | • Haptic ids (define the haptic id to play for the selected button) |
| | | | | | | • Priority (priority on haptics to play, LOW PRIORITY = 0, HIGH PRIORITY = 5) |
| | | | | | | • Looping (NO = 0, YES = 1) |
| | | | | | Speed triggered (NO = 0, YES =1) | |
| | 0x03 | Z-LED brightness | 1 | RW | MIN= 0, MEDIUM = 1, MAX= 2 (default is MAX) | |
| | 0x04 | Analogue surface sensitivity | 1 | RW | 0 to 100 (default = TBD in DVT3) | |
| | 0x05 | Analogue surface dead zone | 1 | RW | 0 to 50 (default = ?10% for start? TBD ) | |
| | 0x06 | Haptics Master ON/OFF | 1 | RW | OFF = 0, ON = 1 (default = OFF) | |
| | | | | | Master ON/OFF is applicable for haptics effect to play when a button/sensor is pressed. It does not apply for CONTROLLER_REQUEST command. | |
| | 0x07 | Sleep Timeout | 1 | RW | Each unit is one minute (MIN = 3, MAX = 10) (default = 3) | |
| | 0x08 | Haptics shifting | 1 | RW | | • Priority (priority on haptics to play, LOW PRIORITY = 0, HIGH PRIORITY = 5) |
| | | | | | | • Waveform Custom (15 bytes buffer with custom waveform samples) |
| | | | | | | • Waveform Custom Last gear (15 bytes buffer with custom waveform samples) |
| | | | | | Waveform Custom values: each byte represent the magnitude of the haptic to play. The byte is unsigned: 0 is the min value and 127 is the max, the second half of the byte is mirrored, where 127 is the max and 255 is the min. | |
| | 0x09 | loopingMaxTime | 1 | RW | Max time an haptic effect can play while looping. 1 unit is 100ms | |
| | | | | | | |

### 6.1. Device Information Page

The Device Information Page holds device specific information such as firmware version or the serial number.

### 6.2. Trainer Configuration Page

The Trainer Configuration page holds information that is used to configure a smart trainer device.

### 7. Messages

Each ZAP message has an assigned unique opcode of 1 byte.

Each message has assigned a type:
- **Request:** defines a message sent from a ZAP Client to a ZAP Server that is expecting a Response message back
- **Response:** defines a message sent from a ZAP Server to a ZAP Client in response to a Request message or an asynchronous procedure triggered on a ZAP Server by the ZAP Client. On ZCS, these types of messages are sent via the **Sync Tx** characteristic
- **Set:** defines a message sent from a ZAP Client to a ZAP Server that is not expecting any messages back
- **Asynchronous:** defines a message sent asynchronously from a ZAP Server to a ZAP Client. On ZCS, these types of messages are sent via the **Async** characteristic.

All messages sent during a ZAP session shall be encrypted.

The messages defined by the protocol are listed in the table below:

**Table 7-1: ZAP Messages**

| **Op Code** | **Message** | **Direction (C-Client, S-Server)** | **Type** |
|---|---|---|---|
| 0x00 | GET | C->S | Request |
| 0x01 | DEV_INFO_STATUS | S->C | Response |
| 0x03 | TRAINER_NOTIFICATION | S->C | Asynchronous |
| 0x04 | TRAINER_CONFIG_SET | C->S | Set |
| 0x05 | TRAINER_CONFIG_STATUS | S->C | Response |
| 0x07 | ZWIFT_PLAY_NOTIFICATION | S->C | Asynchronous |
| 0x08 | DFU_START | C->S | Request |
| 0x0C | DEV_INFO_SET | C->S | Set |
| 0x0F | POWER_OFF | C->S | Set |
| 0x10 | ZWIFT_FRAME_NOTIFICATION | S->C | Asynchronous |
| 0x15 | DIAG_DATA_READY_NOTIFICATION | S->C | Asynchronous |
| 0x16 | DIAG_DATA | S->C | Response |
| 0x18 | RESET | C->S | Set |
| 0x19 | BATTERY_NOTIFICATION | S->C | Asynchronous |
| 0x1A | BATTERY_STATUS | S->C | Response |
| 0x20 | ZWIFT_PLAY_VERSIONS | S->C | Response |
| 0x21 | ZWIFT_FRAME_VERSIONS | S->C | Response |
| 0x28 | GAME_STATE | C->S | Asynchronous |
| 0x29 | DFU_START_STATUS | S->C | Response |
| 0x2B | FAULT_DATA_NOTIFICATION | S->C | Response |
| 0x2C | ZWIFT_PLAY_SETTINGS_STATUS | S->C | Response |
| 0x2D | ZWIFT_PLAY_SETTINGS_SET | C->S | SET |
| 0x2E | ZWIFT_HUB_CALIBRATION_DATA | S->C | Response |
| 0x2F | ZWIFT_HUB_CALIBRATION_DATA_SET | C->S | SET |
| 0x30 | EOL_LOCK_SET | C->S | Set |
| 0x31 | EOL_LOCK_STATUS | S->C | Response |
| 0x37 | ZWIFT_CLICK_NOTIFICATION | S->C | Asynchronous |
| 0x38 | ZWIFT_CLICK_VERSIONS_RESPONSE | S->C | Response |
| 0x39 | ZWIFT_HUB_VERSIONS_RESPONSE | S->C | Response |
| 0x3A | TRAINER_SPINDOWN_REQUEST | C->S | Set |
| 0x3B | TRAINER_SPINDOWN_NOTIFICATION | S->C | Asynchronous |
| 0x3C-0x51 | Reserved for Future Use | | |
| 0x52 | RIDE_ON | S<->C | Request / Response |
| 0x53-0xFD | Reserved for Future Use | | |
| 0xFE | LOST_CONTROL | S->C | Asynchronous |
| 0xFF | Reserved for Future | | |

### 7.1.RIDE_ON

The RIDE_ON message is a fixed length message sent by either the ZAP Client or the ZAP Server to announce (in the case of the ZAP Client) or to acknowledge (in the case of the ZAP Server) the support of the Zwift Application Protocol. This message helps the ZAP Server discard any other junk data that may be sent by mistake over the transport bearer before a ZAP session is created.

The message PDU contains the following fields:

**Table 7-2: Ride On Message PDU**

| **Field** | **Description** |
|---|---|
| Phrase | 0x69 0x64 0x65 0x4f 0x6e ("ideOn") |
| ZAP Major Version | Major Version of the ZAP spec implemented by the local device |
| ZAP Minor Version | Minor Version of the ZAP spec implemented by the local device |
| Public Key | Public Key from the Key Pair generated by the local device. See Section 10. |

### 7.2. LOST_CONTROL

The LOST_CONTROL message shall be sent by the ZAP Server to announce to the ZAP Client that another ZAP Client has established a session (this may happen on a trainer where another connection was set up e.g.: while the Game was in communication with the Trainer via TCP, a USB connection requested control).

The Client shall assume that the current session is closed and shall not send any other messages.

The ZAP Client may trigger the ZAP handshake to create another session.

Note: If the ZAP session ended, the transport may still be set up. (e.g.: the TCP connection will still be up)

The message PDU has no payload.

### 7.3. POWER_OFF

The POWER_OFF message is sent by the ZAP Client to trigger a power off procedure on the ZAP Server, if supported.

The message PDU has no payload.

### 7.4. RESET

The ZAP Client sends the RESET message to trigger a RESET procedure on the ZAP Server if supported.

The message has no payload.

### 7.5.GET

The GET message is sent by the ZAP Client to request information about Readable Data Objects on the ZAP Server.

The message PDU contains the following fields:

**Table 7-3: GET Message PDU**

| **Field** | **Description** |
|---|---|
| dataObjectId | 16-bit identifier of the requested data object. See 6. |

### 7.6.DEV_INFO_SET

The DEV_INFO_SET message is sent by the ZAP Client to configure Device Info Data Objects on the ZAP Server.

The payload of the message is:

| **Message PDU** |
|---|
| DevInfoSet protobuf message |

### 7.7. DEV_INFO _STATUS

The DEV_INFO_STATUS message is sent by the ZAP Server in response to a GET message for page 0x00.

The message PDU contains the requested fields from the Device Info Page.

### 7.8. TRAINER_NOTIFICATION

The TRAINER_NOTIFICATION message is sent by the ZAP Server to a ZAP Client asynchronously.

The message PDU contains the following fields:

**Table 7-4: TRAINER_NOTIFICATION message fields**

| **Field** | **Description** |
|---|---|
| power | Mechanical Power (1 unit = 1 W) |
| cadence | Pedaling cadence (1 unit = 1 rpm) |
| bikeSpeed | Speed of the virtual bike (1 unit = 0.01 m/s) |
| averagedPower | Mechanical power averaged over the configured averaging window (1 unit = 1 W) |
| wheelSpeed | Rotational speed of the motor (unit = 0.01 rpm) |
| calculatedRealGearRatio | Real Gear Ratio as culculated by the trainer (Divisor = 10000) |

### 7.9. TRAINER_CONFIG_SET

The ZAP Client sends the TRAINER_CONFIG_SET message to configure Writable Data Objects on the ZAP Server from page 0x02.

The message PDU contains the configured fields from the Trainer Configuration Page.

### 7.10. TRAINER_CONFIG_STATUS

The ZAP Server shall send the TRAINER_CONFIG_STATUS message:
- in response to a GET message for Page 0x01. The Message PDU shall contain the values of the requested Data Objects, or
- in response to a TRAINER_CONFIG_SET message that sets one or more of the Data Objects from Page 0x01.

The message PDU fields are similar to the ones in the TRAINER_CONFIG_SET message.

### 7.11. TRAINER_SPINDOWN_REQUEST

The TRAINER_SPINDOWN_REQUEST message is sent by the ZAP Client to the ZAP Server to request a SPINDOWN procedure to be executed.

The SpindownRequest protobuf message can trigger only one of these procedures at a time:

| **Spindown Procedures** | **Description** |
|---|---|
| StartSpindown | Request to start the manual spindown process |
| IgnoreSpindown | Request to cancel/ignore current spindown process if in progress |

### 7.12. TRAINER_SPINDOWN_NOTIFICATION

The TRAINER_SPINDOWN_EVENT message is sent by the ZAP Server asynchronously to the ZAP Client to signal local events.

The SpindownEvent message signals only one of these events at a time:

**Table 75: [desc]**

| **Spindown Events** | **Description** |
|---|---|
| ManualSpindownStatus | Current status of manual spindown process |
| AutoSpindownStatus | Event to notifying an auto spindown has been completed |

| | |
|---|---|
| Note: The SPINDOWN Event is sent as an Async message as it may encapsulate Zap Async messages | |

### 7.13. DFU_START

The DFU_START message is sent by the ZAP Client to set the device implementing the ZAP Server in a Device Firmware Update mode.

The message PDU contains the following fields:

**Table 7-6: [desc]**

| **Field** | **Description** | |
|---|---|---|
| dfuTarget | The type of target that needs to be updated: | |
| | | • 0x00 - nRF Target Application |

### 7.14. DFU_START_STATUS

The ZAP Server shall send the DFU_START_STATUS message in response to a DFU_START message.

The message PDU contains the following fields:

**Table 7-7: [desc]**

| **Field** | **Description** |
|---|---|
| Ready = 0 | DFU start message received and ready to next steps |
| Not ready = 1 | DFU start message received but not ready to proceed. |

### 7.15. POWER_OFF

The POWER_OFF message is sent by the ZAP Client to trigger a power off procedure on the ZAP Server, if supported.

The message PDU has no payload.

### 7.16. DIAG_DATA_READY_NOTIFICATION

The DIAG_EVENT_DATA_READY message is sent by the ZAP Server asynchronously to notify that new diagnostics data is ready to be sent.

The message is sent periodically until still, some diagnostics data is ready to be sent.

The message PDU does not have a payload.

**Note:** the ZAP Server will implement this notification only if it needs a Gateway to the cloud to send diagnostics logging (e.g., BLE only device).

### 7.17. DIAG_DATA

The ZAP Server sends the DIAG_DATA message in response to a GET message for Data Object ID 0x0302.

The message PDU contains the following fields:

**Table 7-8: [desc]**

| **Field** | **Description** |
|---|---|
| chunkData | binary blob containing compressed diagnostics data. If the container has zero length, no diagnostics data needs to be synchronised with the server |

### 7.18. BATTERY_NOTIFICATION

The ZAP Server sends the BATTERY_NOTIFICATION message to notify about a change of charging state or percentage in the battery.

The message PDU contains one of the following fields:

**Table 7-9: [desc]**

| **Field** | **Description** |
|---|---|
| newChgState | new charging state of type ChargingState (enum) |
| newPercLevel | new percentage level |
| timeToEmpty | New time in minutes to empty the battery |
| timeToFull | New time in minutes to fully charge the battery |

### 7.19. BATTERY_STATUS

The BATTERY_STATUS message is sent by the ZAP Server in response to a GET message for Data Object ID 0x0303.

The message PDU contains the following fields:

**Table 7-10: [desc]**

| **Field** | **Description** |
|---|---|
| chgState | charging state of type ChargingState (enum) |
| percLevel | percentage level |
| timeToEmpty | Time in minutes to empty the battery |
| timeToFull | Time in minutes to fully charge the battery |

### 7.20. GAME_STATE

The GAME_STATE is sent by the ZAP Client to notify the Server of the any state changes of the game, example is the current speed the avatar is moving

The message PDU shall only contain **one** of the following data blobs:

| **Field** | **Description** |
|---|---|
| bikeSpeed | Speed factor used by haptic to adapt magnitude [0..100] |
| bikeGear | Gear set in Game, used by haptic to play custom wave when a side/shifting button is pressed |

| **bikeGear Field** | **Description** |
|---|---|
| gear | Gear currently used |
| gearMax | Max gear to detect haptic secondary effect to play |
| gearMin | Min gear to detect haptic secondary effect to play |

### 7.21. FAULT_DATA_NOTIFICATION

The ZAP Server sends the FAULT_DATA_NOTIFICATION message to notify about a new fault_data object.

The message PDU contains the following fields:

| **Field** | **Description** |
|---|---|
| faultId | The content is a number that describe the fault number. Depending on the faultld received the client can take action to recover the fault. |
| faultData | binary blob containing fault data |

### 7.22. EOL_LOCK_SET

The EOL_LOCK_SET message is sent by the ZAP Client to the ZAP Server to set the end of line lock status.

The EolLockStatus protobuf message can set one of the following option:

**Table 711: [desc]**

| **Lock State** | **Description** |
|---|---|
| true | Lock EOL status, so end of line feature cannot run |
| false | Unlock EOL status, so end of line feature can run |

### 7.23. EOL_LOCK_STATUS

The EOL_LOCK_STATUS message is sent by the ZAP Server to the ZAP Client in response of EOL_LOCK_SET. The Status value is to validate if the EOL_LOCK_SET is successfully executed.

The EolLockStatus protobuf message can set one of the following option:

| **Lock State** | **Description** |
|---|---|
| true | Status set successful |
| false | Status not set |

### 7.24. ZWIFT_PLAY_NOTIFICATION

The ZWIFT_PLAY_NOTIFICATION message provides information about local UI events. The message PDU contains the following fields:

**Table 7-12: ZWIFT_PLAY_NOTIFICATION Message Fields**

| **Field** | **Description** |
|---|---|
| isLeft | True if left controller data are sent |
| btnPadUp | Up button event |
| btnPadLeft | Left button event |
| btnPadRight | Right button event |
| btnPadDown | Down button event |
| btnSide | Side button |
| btnFront | Front button or Z button |
| horizontalAnalog | Horizontal analog sensor (-100/100) |
| verticalAnalog | Vertical analog sensor (0/100) |

### 7.25. ZWIFT_PLAY_VERSIONS

The ZWIFT_PLAY_VERSIONS message is sent by the ZAP Server in response to a GET message for Data Object ID 0x0306.

The message PDU contains the following fields:

**Table 7-13: [desc]**

| **Field** | **Description** |
|---|---|
| nRFBootloaderVersion | Nordic nRF52 bootloader version, 1 byte |
| nRFSoftDeviceIdentifier | Nordic nRF52 SoftDevice identifier, 2 bytes |
| nRFFWVersion | Nordic nRF52 firmware version. |
| | Format: 0xMMmmpppp, where: M- Major version, m - minor version, p - patch version |
| nRFFWBuild | Build ID of the nRF Application Firmware, 4 bytes |

### 7.26. ZWIFT_PLAY_SETTINGS_SET

The ZWIFT_PLAY_SETTINGS_SET message is sent by the ZAP Client to configure Writable Data Objects on the ZAP Server from page 0x06.

The payload of the message is can be one field at time of the road controller settings:

| **Field** | **Description** |
|---|---|
| Haptics Analogue | Haptics Analogue settings. This field can be a multiple instance associated to the analogue sensors number (See table above for details) |
| Haptics Button | Haptics Button settings. This field can be a multiple instance associated to the button sensors number (See table above for details) |
| Z-LED brightness | MIN= 0, MEDIUM = 1, MAX= 2 (default is MAX) |
| Analogue surface sensitivity | 0 to 100 (default = TBD in DVT3) |
| Analogue surface dead zone | 0 to 50 (default = ?10% for start? TBD ) |
| Haptics Master ON/OFF | OFF = 0, ON = 1 (default = ON) |
| Sleep Timeout | Each unit is one minute (MIN = 3, MAX = 10) (default = 3) |
| HapticsConfigurationShifting | Haptic settings for shift button, (See table above for details in section HapticsConfigurationShifting) |
| loopingMaxTime | Max time an haptic effect can play while looping. 1 unit is 100ms |

### 7.27. ZWIFT_PLAY_SETTINGS_STATUS

The ZWIFT_PLAY_SETTINGS_STATUS message is sent by the ZAP Server in response to a GET message for page 0x06.

The payload of the message is formatted as follow:

| **Field** | **Description** |
|---|---|
| Haptics Analogue Table | Haptics Analogue settings. This field can be a multiple instance associated to the analogue sensors number (See table below for details) |
| Haptics Button Table | Haptics Button settings. This field can be a multiple instance associated to the button sensors number (See table below for details) |
| Z-LED brightness | MIN= 0, MEDIUM = 1, MAX= 2 (default is MAX) |
| Analogue surface sensitivity | 0 to 100 (default = TBD in DVT3) |
| Analogue surface dead zone | 0 to 50 (default = ?10% for start? TBD ) |
| Haptics Master ON/OFF | OFF = 0, ON = 1 (default = ON) |
| Sleep Timeout | Each unit is one minute (MIN = 3, MAX = 10) (default = 3) |
| HapticsConfigurationShifting | Haptic settings for shift button, see table below for content |
| loopingMaxTime | Max time an haptic effect can play while looping. 1 unit is 100ms |

### 7.27.1. Haptics analogue table

| **Field** | **Description** |
|---|---|
| Haptics Id High | Haptics Id sequence to play when sensor is active and its value is above the threshold (Haptics Threshold)(min =1, max = 123) |
| Haptics Id Low | Haptics Id sequence to play when sensor is active and its value is below the threshold (Haptics Threshold) (min =1, max = 123) |
| Haptics Threshold | Threshold to define when to play Haptics Id High/Low |
| Priority | It defines the priority of the haptics to play against all the sensors in the system (analogue and button) (LOW PRIORITY = 0, HIGH PRIORITY = 5) |
| Looping | Looping feature to be enable/disabled (NO = 0, YES = 1) |
| Speed triggered | Speed triggered feature to be enable/disabled (NO = 0, YES = 1) |

### 7.27.2. Haptics button table

| **Field** | **Description** |
|---|---|
| Haptics Id | Haptics Id sequence to play when sensor is active(min =1, max = 123) |
| Priority | It defines the priority of the haptics to play against all the sensors in the system (analogue and button) (LOW PRIORITY = 0, HIGH PRIORITY = 5) |
| Looping | Looping feature to be enable/disabled (NO = 0, YES = 1) |
| Speed triggered | Speed triggered feature to be enable/disabled (NO = 0, YES = 1) |

### 7.27.3. HapticsConfigurationShifting

| **Field** | **Description** |
|---|---|
| priority | It defines the priority of the haptics to play against all the sensors in the system (analogue and button) (LOW PRIORITY = 0, HIGH PRIORITY = 5) |
| hapticCustomWaveShift | Waveform Custom values: each byte represent the magnitude of the haptic to play. The byte is unsigned: 0 is the min value and 127 is the max, the second half of the byte is mirrored, where 127 is the max and 255 is the min. |
| | It is used when the gear is changed to a value different from max and min |
| hapticCustomWaveLastGear | Waveform Custom values: each byte represent the magnitude of the haptic to play. The byte is unsigned: 0 is the min value and 127 is the max, the second half of the byte is mirrored, where 127 is the max and 255 is the min. |
| | It is used when the gear is changed to a value of max or min |

### 7.28. ZWIFT_HUB_CALIBRATION_DATA

The ZWIFT_HUB_CALIBRATION_DATA message is sent by the ZAP Server in response to a GET message for data object 0x0309.

The payload of the message is formatted as follow:

| **Field** | **Description** |
|---|---|
| zwiftHubCalibrationParameters | |
| zwiftHubCalibrationState | |
| controlLoopGain | |
| currentMeasurementOffset | |
| zwiftHubElectromagnetOffpower | |

### 7.28.1. zwiftHubCalibrationParameters

| **Field** | **Description** |
|---|---|
| calibration Parameters | Array of uint32_t values generated as part of the factory calibration process. |
| | Maximum number of values is 15 |

### 7.28.2. zwiftHubCalibrationState

| **Field** | **Description** |
|---|---|
| factoryCalibrationState | Enumerator providing an indication of the stored factory calibration status |
| | Possible states: |
| | FACTORY_SERIAL_NUMBER = 0, |
| | FACTORY_MEASURING = 1, |
| | FACTORY_FIT_REQUIRED = 2, |
| | FACTORY_MEASURING_CHECK = 3, |
| | FACTORY_MEASURING_SUCCESS = 4, |
| | FACTORY_VALIDATING = 5, |
| | FACTORY_VALIDATING_SUCCESS = 6, |
| | FACTORY_CALIBRATION_SUCCESS = 7, |
| | FACTORY_RECAL_REQUIRED = 8, |
| | FACTORY_RECAL_CHECK = 9, |
| | FACTORY_RECAL_1_SUCCESS = 10, |
| | FACTORY_RECAL_FAIL = 11, |
| | FACTORY_RECAL_2_SUCCESS = 12 |
| serialNumber | Serial Number generated as part of the factory calibration process, max 18 bytes |
| calibrationVersion | 16bit value indicating the calibration process/routine version used to generate the calibration data |

### 7.28.3. zwiftHubElectormagnetOffPower

| **Field** | **Description** |
|---|---|
| curve | |
| gain | |
| offset | |

### 7.29. ZWIFT_HUB_CALIBRATION_DATA_SE T

The ZWIFT_HUB_CALIBRATION_DATA_SET message is sent by the ZAP Client to write/restore previously extracted factory calibration data.

The payload of the message is can be one of the following data sets:

| **Field** | **Description** |
|---|---|
| calibrationParameters | Array of uint32_t values generated as part of the factory calibration process. |
| | Maximum number of values is 15 |

| **Field** | **Description** |
|---|---|
| factoryCalibrationState | Enumerator providing an indication of the stored factory calibration status |
| | Possible states: |
| | FACTORY_SERIAL_NUMBER = 0, FACTORY_MEASURING = 1, FACTORY_FIT_REQUIRED = 2, FACTORY_MEASURING_CHECK = 3, FACTORY_MEASURING_SUCCESS = 4, FACTORY_VALIDATING = 5, FACTORY_VALIDATING_SUCCESS = 6, FACTORY_CALIBRATION_SUCCESS = 7, FACTORY_RECAL_REQUIRED = 8, FACTORY_RECAL_CHECK = 9, FACTORY_RECAL_1_SUCCESS = 10, FACTORY_RECAL_FAIL = 11, FACTORY_RECAL_2_SUCCESS = 12 |
| serialNumber | Serial Number generated as part of the factory calibration process, max 18 bytes |
| calibrationVersion | 16bit value indicating the calibration process/routine version used to generate the calibration data |
| controlLoopGain | |

| **Field** | **Description** |
|---|---|
| currentMeasurementOffset | |

| **Field** | **Description** |
|---|---|
| curve | |
| gain | |
| offset | |

To fully restore the factory calibration data each of the above data sets needs to be send to the device.

### 7.30. ZWIFT_HUB_VERSIONS_RESPONSE

The ZWIFT_HUB_VERSIONS_RESPONSE message is sent by the ZAP Server in response to a GET message for Data Object ID 0x030B (ZWIFT_HUB_VERSIONS)

The message PDU contains the following fields:

**Table 714: [desc]**

| **Field** | **Description** |
|---|---|
| nRFBootloaderVersion | Nordic nRF52 bootloader version, 1 byte |
| nRFSoftDeviceIdentifier | Nordic nRF52 softdevice version, 2 bytes |
| nRFFWVersion | Nordic nRF52 firmware version |
| | Format: 0xMMmmpppp, where: M- Major version, m - minor version, p - patch version |
| nRFFWBuild | Build ID of the nRF application firmware, 4 bytes |

### 7.31. ZWIFT_CLICK_NOTIFICATION

The ZWIFT_CLICK_NOTIFICATION message provides information about local UI events.

The message PDU contains the following fields:

| **Field** | **Description** |
|---|---|
| btnPadPlus | Plus button event |
| btnPadMinus | Minus button event |

### 7.32. ZWIFT_CLICK_VERSIONS_RESPONSE

The ZWIFT_CLICK_VERSIONS_RESPONSE message is sent by the ZAP Server in response to a GET message for Data Object ID 0x030A (ZWIFT_CLICK_VERSIONS).

The message PDU contains the following fields:

| **Field** | **Description** |
|---|---|
| nRFBootloaderVersion | Nordic nRF52 bootloader version, 1 byte |
| nRFSoftDeviceIdentifier | Nordic nRF52 softdevice version, 2 bytes |
| nRFFWVersion | Nordic nRF52 firmware version |
| | Format: 0xMMmmpppp, where: M- Major version, m - minor version, p - patch version |
| nRFFWBuild | Build ID of the nRF application firmware, 4 bytes |

### 7.33. ZWIFT_FRAME_VERSIONS

The ZWIFT_FRAME_VERSIONS message is sent by the ZAP Server in response to a GET message for Data Object ID 0x0307.

The message PDU contains the following fields:

**Table 7-16: [desc]**

| **Field** | **Description** |
|---|---|
| nRFBootloaderVersion | Nordic nRF52 bootloader version, 1 byte |
| nRFSoftDeviceIdentifier | Nordic nRF52 softdevice version, 2 bytes |
| nRFFWVersion | Nordic nRF52 firmware version |
| | Format: 0xMMmmpppp, where: M- Major |
| | version, m - minor version, p - patch version |
| nRFFWBuild | Build ID of the nRF application firmware, 4 bytes |

### 7.34. ZWIFT_FRAME_NOTIFICATION

The ZWIFT_FRAME_NOTIFICATION message is sent by the ZAP Server asynchronously to provide information about local UI events.

The message PDU contains the following fields:

**Table 7-17: [desc]**

| **Field** | **Description** |
|---|---|
| isLeft | Left=true / Right=false |
| btnPadUp | Up button event |
| btnPadLeft | Left button event |
| btnPadRight | Right button event |
| btnPadDown | Down button event |
| btnZ | Z button event |
| btnGearUp | Gear up button event |
| btnGearDown | Gear down button event |
| btnPowerUp | Power up button event |
| btnThumb | Thumb button event |
| horizontalAnalog | Right steering is positive, left is negative |
| verticalAnalog | Analog value of braking |

### 8. Behaviour - ZAP Server

This section specified the behaviour requirements for a ZAP Server.

### 8.1.ZAP Session

### 8.1.1. Creating the ZAP Session

When the transport bearer is established and receiving the RIDE_ON message from the Zwift Game, the ZAP Server shall respond with a similar RIDE_ON message and create the ZAP session.

### 8.1.2. Sending and Processing Messages

The ZAP Server shall send or process messages (other than the RIDE_ON) only when a ZAP session is created.

When receiving a ZAP GET message, the ZAP Server shall respond with a ZAP STATUS message containing the Data Objects requested by the ZAP Client and supported by the ZAP Server.

### 8.1.3. Closing the ZAP Session

The ZAP Session shall close when one of the following happens:
- The ZAP Server receives a RIDE_ON message after the ZAP session is created
- The Transport Bearer is tear down

### 9. Behaviour - ZAP Client

This section specified the behaviour requirements for a ZAP Client.

### 9.1.ZAP Session

### 9.1.1. Creating the ZAP Session

When the transport bearer is established, the ZAP Client shall send the RIDE_ON message and wait for the RIDE_ON message from the ZAP Server. On receiving of the RIDE_ON message, the ZAP session is created.

If a RIDE_ON message is not received in response within 2 seconds, the ZAP Client shall repeat the transmission. This process shall be repeated indefinitely until the transport bearer terminates.

### 9.1.2. Sending and Processing Messages

The ZAP Client shall send messages only when a ZAP session is created.

The ZAP Client shall not process messages (other than the RIDE_ON) before a ZAP session is created.

After sending a GET message, the ZAP Client shall wait for the receival of the STATUS message or a timeout of 2 s before requesting other information from the ZAP Server.

### 9.1.3. Closing the ZAP Session

A ZAP Client shall close a ZAP session if:
- it receives a LOST_CONTROL message or
- The Transport Bearer is torn down

### 10. Security

This section describes the security considerations that apply to the ZAP protocol.

### 10.1. Security Requirements

### 10.1.1. Key Agreement

The ZAP Client and ZAP Server shall implement the Elliptic-curve Diffie-Hellman (ECDH) protocol with the secp256r1 Elliptic Curve for establishing a secured shared secret.

For each ZAP session, the ZAP Client or ZAP Server shall
- generate a public-private key pair
- share the public key to the peer device,
- and use the received public key to generate a shared secret

### 10.1.2. Key Derivation

The ZAP Client and ZAP Server shall implement the RFC 5869 HMAC-based Extract-and-Expand Key Derivation Function (HKDF) with SHA-256.

The device shall use HKDF to derive an encryption key (256 bits) and an initialisation value (IV) (32 bits): $\left.EncryptionKey\right‖ IV = HKDF \left(SHA256,SharedSecret,Salt\right)$ Where:
- SharedSecret - generated from the key agreement
- Salt - concatenation of the ZAP Server public key and the ZAP Client public key.
$Salt = \left.ZAPServerPublicKey\right‖ ZAPClientPublicKey$

### 10.1.3. Sequence Number

The ZAP Client and ZAP Server shall each keep a 32-bit outgoing sequence number for outgoing encrypted messages (SEQ) and a 32-bit incoming sequence number for incoming encrypted messages (EXP_SEQ). Both numbers shall be set to 0 when a new ZAP session is created.

Any ZAP device shall increment the outgoing sequence number for each encrypted message it sends.

Any ZAP device shall reject incoming encrypted messages that use a sequence number less or equal to the expected incoming sequence number.

### 10.1.4. Nonce

The ZAP device shall use a nonce for each encrypted message to be sent. The nonce is a 64-bit value formed by the concatenation of the outgoing sequence number (in little-endian format) and the IV. $Nonce = \left.SEQ\right‖ IV$

### 10.1.5. Encryption Primitives (AES-CCM)

The ZAP device shall encrypt and authenticate the ZAP messages by using AES-CCM [3] as detailed above:$\left(CipherText, MAC\right) = AESCCM \left(PlainText, nonce, EncryptionKey\right)$

Where:
- CipherText: Encrypted ZAP message payload
- MAC: 32-bit message authentication code
- encryption_key: 256-bit key derived using HKDF
- nonce: 64-bit value described in the previous section
- PlainText: ZAP message payload

### 10.2. Behaviour - ZAP Client

### 10.3. Behaviour - ZAP Server

### 11. Message Sequence Charts

### 11.1. ZAP Security Handshake

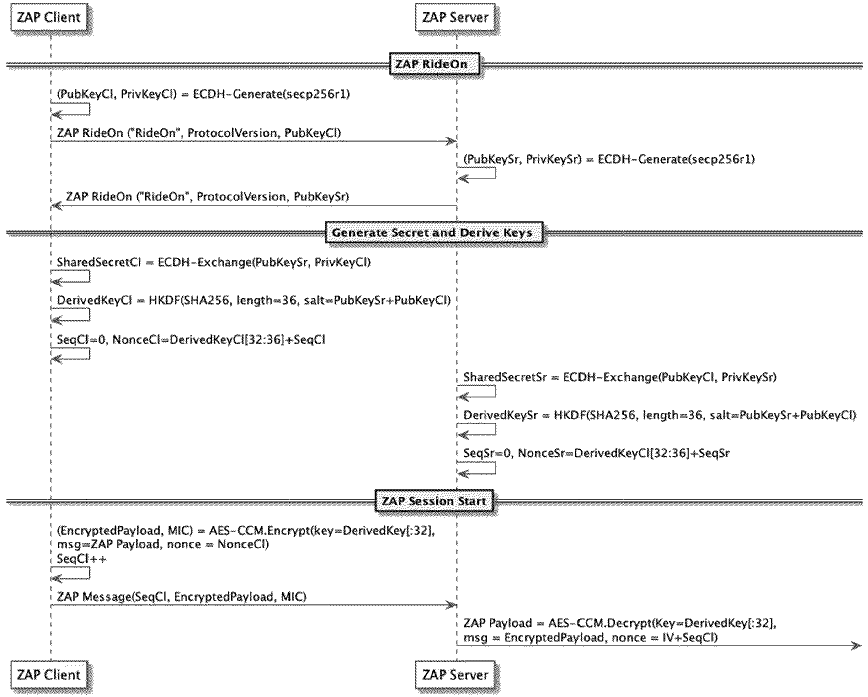

### 11.2. Manual Spindown

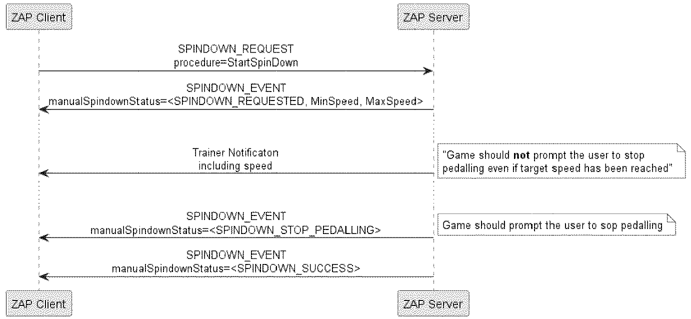

### 12. References

[1] https://en.wiklpedia.org/wiki/Transmission Control Protocol
[2] https://en.wikipedia.org/wiki/USB communications device class
[3] https://datatracker.ietf.org/doc/html/rfc5084

### Annex A. Test or Unused Messages

### 12.1. BLOB_TRANSFER_START

The BLOB_TRANSFER_START message is sent by the ZAP Client to the ZAP Server to start a transfer of a Binary Large Object (BLOB).

One example of using this is to transfer the ESP32 application binary as part of the Firmware Update process.

The message PDU contains the following fields:

**Table 12-1: [desc]**

| **Field** | **Description** |
|---|---|
| blobId | Random 16-bit value assigned by the ZAP Client to identify the transfer in future interactions |
| blobType | 8-bit field that adds a description of the BLOB contents |
| blobSize | Size in octets of the BLOB |
| chunkSize | maximum size of chunkData that can be send in a BLOB_TRANSFER_CHUNK message |

### 12.2. BLOB_TRANSFER_STATUS

The BLOB_TRANSFER_STATUS message shall be sent by the ZAP Server in response to a BLOB_TRANSFER_START message or to a BLOB_TRANSFER_CHUNK message.

The message PDU contains the following fields:

**Table 12-2: BLOB Transfer Status**

| **Field** | **Description** |
|---|---|
| blobId | Random 16-bit value assigned by the ZAP Client to identify the transfer in future interactions |
| blobType | 8-bit field that adds a description of the BLOB contents |
| blobSize | Size in octets of the BLOB |
| chunkSize | maximum size of chunkData that can be send in a BLOB_TRANSFER_CHUNK message |
| blobDownloadedSize | Number of octets already downloaded |
| nextChunkId | Expected Chunk identifier for the incoming BLOB_TRANSFER_CHUNK message |
| state | The state values are described in the table below |

The BLOB Transfer state values are described here:

**Table 12-3: BLOB Transfer states**

| **Field** | **Description** |
|---|---|
| Idle | No BLOB Transfer is active |
| Preparing | The device prepares for the BLOB Transfer (e.g.: preparing the flash sections) |
| In Progress | BLOB Transfer is in progress. Check other parameters. |
| Success | BLOB successfully transferred |
| Failed | BLOB Transfer failed. |

### 12.3. BLOB_TRANSFER_CHUNK

The BLOB_TRANSFER_CHUNK message is sent by the ZAP Client to the ZAP Server to transfer of a chunk of the BLOB.

The message PDU contains the following fields:

**Table 12-4: [desc]**

| **Field** | **Description** |
|---|---|
| chunkId | 16-bit value assigned by the ZAP Client to identify each chunk sent as part of the BLOB. The values start from 0 and are increased incrementally |
| chunkData | Array of bytes that form the specified chunk |

### 12.4. BLOB_TRANSFER_ABORT

The BLOB_TRANSFER_ABORT message is sent by the ZAP Client to the ZAP Server to abort a transfer of a Binary Large Object (BLOB).

The message PDU contains the following fields:

**Table 12-5: [desc]**

| **Field** | **Description** |
|---|---|
| blobId | Random 16-bit value assigned by the ZAP Client to identify the transfer |
| blobType | 8-bit field that adds a description of the BLOB contents |

### 12.5. BRIDGE_REQUEST

The BRIDGE_REQUEST message is sent by the ZAP Client to the ZAP Server to request a BRIDGE procedure to be executed.

### ZWIFT_PLAY_SETTINGS_STATUS

The BridgeRequest protobuf message can trigger only one of these procedures at a time:

**Table 12-6: [desc]**

| **Bridge Procedures** | **Description** |
|---|---|
| FindDevice | Discover Bluetooth devices |
| BleConnect | Connect to a Bluetooth device |
| DeviceDisconnect | Disconnect from a Bluetooth device |
| BleData | Send a GATT Write Request to a connected Bluetooth device |
| BleDataRequest | Send a GATT Read Request to a connected Bluetooth device |
| CharEnableNotify | Write a characteristic's CCCD to enable/disable notifications or indications |
| AntFindDevice | Request for device to enable/start search process |
| AntConnect | Request for device to connect to a specific ANT+ device |
| AntDisconnect | Request to disconnect/remove association with an ANT+ device |
| AntData | Send a message to an ANT+ device |

### 12.6. BRIDGE_EVENT

The BRIDGE_EVENT message is sent by the ZAP Server asynchronously to the ZAP Client to signal local events.

The BridgeEvent message signals only one of these events at a time:

**Table 12-7: [desc]**

| **Bridge Procedures** | **Description** |
|---|---|
| BleDeviceFound | Ble Device discovered |
| DeviceConnected | Bluetooth device connected to the Bridge |
| DeviceDisconnected | Bluetooth device disconnected from the Bridge |
| DeviceError | An error occurred on the Bridge |
| BleData | Received either a GATT Write Response, GATT Notification or GATT Indication from a connected Bluetooth device |
| AntDeviceFound | ANT+ device found |
| AntChannelConfigured | An ANT+ Channel has been configured for association with a device |
| AntDeviceDisconnected | ANT+ Device is no longer sending data |
| AntData | Received data from associated ANT+ device |

| | |
|---|---|
| Note: The BRIDGE Event is sent as an Async message as it may encapsulate Zap Async messages | |

### 12.7. CONTROLLER_REQUEST

The CONTROLLER_REQUEST message is sent by the ZAP Client to the ZAP Server to request a Controller procedure to be executed.

The message can trigger only one of these procedures at a time:

**Table 12-8: [desc]**

| **Controller Procedures** | **Description** |
|---|---|
| ResetCalib | Initiate a reset of controller calibration data |
| vibrate | Requests a vibration pattern to be triggered |
| testLed | Tests the LED on the Controller |
| tsCalib | Starts or Stops the Touch Sensing Calibration |
| tsSensitivity | Updates the Touch Sensing Sensitivity |
| tsRunMode | Configures the Touch Sensing Run Mode |

The **vibrate** field is defined in the **VibrationRequest** message:

**Table 12-9: [desc]**

| **Field** | **Description** |
|---|---|
| start | Message to start the vibration: StartParams |
| stop | Message to stop the vibration: StopParams |

The message **StartParams** contains the following fields:

**Table 12-10: [desc]**

| **Field** | **Description** |
|---|---|
| hapticTarget | Define the target: Left, Right or both left and right |
| isLooping | Define if the defined waveform would play in loop until a stop command is sent |
| waveformId | Define the waveform id to be played on the haptic target (0 to 123) |
| waveformCustom | Define the custom waveform to be played on the haptic target (15 bytes buffer) |

The message **StopParams** contains the following fields:

**Table 12-11: [desc]**

| **Field** | **Description** |
|---|---|
| hapticTarget | Define the target: Left, Right or both left and rigth |

### 12.8. LIGHTS_STATUS

The LIGHTS_STATUS message is sent by the ZAP Server in response to a LIGHTS_SET message. The Message PDU shall contain whether the command was accepted by the ZAP Server.

### 12.9. BLOB_TRANSFER_ABORT

TBD

### 12.10. WIFI_PROV_EVENT

The WIFI_PROV_EVENT message is sent by the ZAP Server asynchronously to the ZAP Client to signal events related to Wi-Fi network provisioning, specifically:
AP scan results. One event per AP. The process of scanning is started and stopped via the WIFI_PROV_REQUEST message.

Wi-Fi Connection status. If a ZAP session is open, a connection event will be sent even if it's not the direct result of a new provisioning (e.g., if credentials were already available at boot)

### 12.11. WIFI_PROV_REQUEST

The WIFI_PROV_REQUEST message is sent by the ZAP Client to the ZAP Server to request a WiFi provisioning procedure to be executed. The procedures available are:
Scan Start: start scanning for Wi-Fi AP. For each AP found, a WIFI_PROV_EVENT message (containing SSID, RSSI and security protocol will be sent.

Scan Stop: stop the scanning procedure. After this command, no further WIFI_PROV_EVENT messages will be generated; however, any WIFI_PROV_EVENT that had been queued before sending Scan Stop might still be delivered after it.

Provision Network: depending on the *clear* payload flag, either clear any previously stored credentials or set new ones provided in the WifiProvisionRequest payload and connect to the network. A "Connected" WIFI_PROV_EVENT will be sent when the connection is established (i.e., an IP address was assigned)

The payload of the message is:

**Table 12-12: [desc]**

| **Message PDU** |
|---|
| WifiProvisionRequest protobuf message |

### 12.12. ZWIFT_WHEEL_VERSIONS

The ZAP Server sends the ZWIFT_WHEEL_VERSIONS message in response to a GET message for Data Object ID 0x0304.

The message PDU contains the following fields:

**Table 12-13: [desc]**

| **Field** | **Description** |
|---|---|
| motorFwVersion | The firmware version of the motor board, 2 bytes |
| motorHwVersion | Hardware version of the motor board, 2 bytes |
| stm32FwVersion | Firmware version of the STM32, 4 bytes |
| esp32FwVersion | Firmware version of the ESP32, 4 bytes |
| nRFBootloaderVersion | Nordic nRF52 bootloader version, 1 byte |
| nRFSoftdeviceVersion | Nordic nRF52 SoftDevice Identifier, 2 bytes |
| nRFFWVersion | Nordic nRF52 firmware version, 4 bytes |
| stm32FWBuild | Build ID of the STM32 firmware, 4 bytes |
| esp32FWBuild | Build ID of the ESP32 firmware, 4 bytes |
| nRFFWBuild | Build ID of the nRF52 application firmware, 4 bytes |

| | |
|---|---|
| Note: stm32FwVersion, esp32FwVersion and nRFFwVersion fromat is: 0xMMmmpppp, where: M-Major version, m - minor version, p - patch version | |

### 12.13. LIGHTING_ANIMATION_SET

The ZAP Client sends the LIGHTING_ANIMATION_SET message to trigger animations on the ZAP Server.

The message PDU contains the following fields:

**Table 12-14: [desc]**

| **Field** | **Description** |
|---|---|
| lightId | List of up to 5 LightIDs this command must be applied to |
| motion | Motion Effect to be applied. See table below |
| effect | Coloured Effect to be applied. See table below |

The **motion** field has the following subfields:

**Table 12-15: [desc]**

| **Field** | **Description** |
|---|---|
| updateAndContinue | Optional. True if the motion needs to be updated, but continue from the current offset, false or absent if the motion needs to be updated and restart from offset 0. |
| motion | Motion to be applied. See table below |

The **effect** field has the following subfields:

**Table 12-16: [desc]**

| **Field** | **Description** |
|---|---|
| enqueue | True if the effect needs to be queued, False if it will be executed immediately |
| counter | Random number that defines the queued set. When an animation is queued, it will have to have the same counter value as the already pending animations. |
| layer | Apply the effect on either the Base Layer or the Overlay Layer |
| effect | Effect to be applied. See table below |
| effectId | Unique number set by the server to identify an animation request |

The following effects may be implemented:

### 12.13.1. Mirror Fill

The effect has the following parameters:

**Table 12-17: [desc]**

| **Field** | **Description** |
|---|---|
| hue | Hue value inside the interval [0, 360] |
| saturation | Saturation value inside the interval [0,100] |
| value | Brightness value inside the interval [0,100] |
| fillCount | Number of LEDs to light up during one rendering period |
| fillPeriodMs | Rendering period in milliseconds |

### 12.13.2. Colour Transition

The effect has the following parameters:

**Table 12-18: [desc]**

| **Field** | **Description** |
|---|---|
| hueStart | Hue value inside the interval [0, 360] |
| saturationStart | Saturation value inside the interval [0,100] |
| valueStart | Brightness value inside the interval [0,100] |
| hueStart | Hue value inside the interval [0, 360] |
| saturationStart | Saturation value inside the interval [0,100] |
| valueStart | Brightness value inside the interval [0,100] |
| stepCount | Number of intermediary interpolation steps |
| stepPeriodMs | Rendering interpolation period in ms (e.g.: how often do we apply an extra interpolation step) |

The **motion** field implements the following effects:

### 12.13.3. Pattern Motion

This motion has the following parameters:

**Table 12-19: [desc]**

| **Field** | **Description** |
|---|---|
| moveCount | Number of LED to move the pattern for each period |
| movePeriodMs | Move period value in ms |
| patternCount | Number of LEDs in the pattern |
| pattern | Pattern of shades (uint8 values in in the interval [0,100] to be applied |
| isForward | Direction of the spin. |

### 12.13.4. Spokes Motion

This motion has the following parameters:

**Table 12-20: [desc]**

| **Field** | **Description** |
|---|---|
| moveCount | Number of LED to move the pattern for each period |
| movePeriodMs | Move period value in ms |
| spokesCount | Number of spokes to be created |
| spokesWidth | Number of LED per spoke |

### 12.13.5. Confetti

The effect has the following parameters:

**Table 12-21: [desc]**

| **Field** | **Description** |
|---|---|
| ColourList[16] | Max number of colors |
| stepCount | Number of steps |
| stepPeriodMs | Rendering period in ms |
| durationMs | Duration in ms of the animation |

### 12.13.6. Fill pattern

This animation fill will the element by scrolling the defined pattern. Starting from an empty element and finishing when the element is fully filled.

The effect has the following parameters:

**Table 12-22: [desc]**

| **Field** | **Description** |
|---|---|
| Pattern[32] | HSV pattern with a max size of 32 colors |
| fillPeriodMs | Rendering period in ms |
| | Direction of the filling: |
| revert | false:led 0 to x |
| | True: led x to 0 |

### 12.13.7. Mirror Fill pattern

This animation fill will the element by scrolling the defined pattern starting from the middle with a mirror effect. Starting from an empty element and finishing when the element is fully filled.

The effect has the following parameters:

**Table 12-23: [desc]**

| **Field** | **Description** |
|---|---|
| Pattern[32] | HSV pattern with a max size of 16 colors |
| fillPeriodMs | Rendering period in ms |
| revert | Direction of the filling: |
| | false:led middle to end |
| | True: end to middle |

### 12.14. LIGHTING_EFFECT_END_EVENT

The LIGHTING_EFFECT_END_EVENT message is sent by the ZAP Client to notify that the lighting animation linked with the effectld has finished.

The message PDU contains the following fields:

| **Game State Change Blob** | **Description** |
|---|---|
| effectld | Unique number set by the server to identify an animation request |

### 12.15. LIGHTING_PATTERN_SET

The LIGHTING_PATTERN_SET message is sent by the ZAP server to set a static led patter on an element.

The message PDU contains the following fields:

| **Field** | **Description** |
|---|---|
| Lightld | Id of the element on which the pattern will apply |
| Pattern[27] | HSV pattern to apply, with a maximum value of 27 (top tube max LED number) |

### 12.16. WIFI_SSID_STATUS

The WIFI_SSID_STATUS message is sent by the ZAP Server in response to a GET message for page 0x03 object identifier 0x05.

The payload of the message is:

**Table 12-24: [desc]**

| **Message PDU** |
|---|
| wifiStatus 1 Byte, ssidName 32 bytes |

### 12.17. LIGHTING_ERROR

The LIGHTING_ERROR message is sent by the ZAP Server in response to a lighting message during whose execution an error occurred.

The message PDU contains the following fields:

**Table 12-25: [desc]**

| **Field** | **Description** |
|---|---|
| opCode | Opcode of the message that generated the error. 1 byte |
| error | Type of error that occurred. The error is a protobuf message, enum LightingErrorCode |

### 12.18. LOG_DATA_NOTIFICATION

The ZAP Server sends the LOG_DATA_NOTIFICATION message to notify about a new log_data object. The client can decide to store or discard the message depending on feature/configuration

The message PDU contains the following fields:

| **Field** | **Description** |
|---|---|
| chunkData | binary blob containing compressed log data |

### 12.19. SECONDARY_CONTROLLER_NOTIF

The ZAP Server sends the SECONDARY_CONTROLLER_NOTIF message to notify about a new secondary controller data object change.

The message PDU contains the following fields:

| **Field** | | **Description** |
|---|---|---|
| secondaryStatus | Connection/Pairing status of the secondary unit | |
| | NOT_PAIRED | (not connected,not paired to a secondary unit) |
| | PAIRED_NOT_CONNECTED | (paired but not connected) |
| | CONNECTED | (paired and connected) |
| userSettings | The data content is defined in ZWIFT_PLAY_SETTINGS_STATUS message | |
| batterynotification | The data content is defined in BATTERY_NOTIFICATION message | |

### 12.20. ZWIFT_PLAY_BATTERY_NOTIFICATIO N

The ZAP Server sends the ZWIFT_PLAY_BATTERY_NOTIFICATION message to notify about a change of charging state or percentage in the battery for both unit of Zwift play device or in response of BATTERY_STATUS request.

The message PDU contains **one** of the following fields:

| **Field** | **Description** |
|---|---|
| right | The data content is defined in BATTERY_NOTIFICATION message |
| left | The data content is defined in BATTERY_NOTIFICATION message |

### 12.21. ZWIFT_PLAY_SECONDARY_DEVICE_1 NFO

The ZWIFT_PLAY_SECONDARY_DEVICE_INFO message is sent by the ZAP Server in response to a GET message for page 0x07.

The message PDU contains the requested fields from the Secondary Device Info Page.

### 12.22. ZWIFT_PLAY_SETTINGS_SET_SEC

The ZWIFT_PLAY_SETTINGS_SET_SEC message is sent by the ZAP Client to configure Writable Data Objects on the ZAP Server from page 0x08.

The payload of the message is can be one field at time of the road controller settings:

| **Field** | **Description** |
|---|---|
| Haptics Analogue | Haptics Analogue settings. This field can be a multiple instance associated to the analogue sensors number (See table above for details) |

| **Field** | **Description** |
|---|---|
| Haptics Button | Haptics Button settings. This field can be a multiple instance associated to the button sensors number (See table above for details) |

| **Field** | **Description** |
|---|---|
| Z-LED brightness | MIN= 0, MEDIUM = 1, MAX= 2 (default is MAX) |

| **Field** | **Description** |
|---|---|
| Analogue surface sensitivity | 0 to 100 (default = TBD in DVT3) |

| **Field** | **Description** |
|---|---|
| Analogue surface dead zone | 0 to 50 (default = ?10% for start? TBD ) |

| **Field** | **Description** |
|---|---|
| Haptics Master ON/OFF | OFF = 0, ON = 1 (default = ON) |

| **Field** | **Description** |
|---|---|
| Sleep Timeout | Each unit is one minute (MIN = 3, MAX = 10) (default = 3) |

| **Field** | **Description** |
|---|---|
| | • Priority (priority on haptics to play, LOW PRIORITY = 0, HIGH PRIORITY = 5) |
| Haptics shifting | • Waveform Custom (15 bytes buffer with custom waveform samples) |
| | • Waveform Custom Last gear (15 bytes buffer with custom waveform samples) |

| **Field** | **Description** |
|---|---|
| loopingMaxTime | 1 unit is 100ms |

### 12.23. ZWIFT_PLAY_NOTIF_PAIR

The ZWIFT_PLAY_NOTIF_PAIR message provides information about local UI events. The message PDU contains the following fields:

| **Field** | **Description** |
|---|---|
| right | Controller Notification |
| left | Controller Notification |

The controller notification is define in the following table

| **Field** | **Description** |
|---|---|
| btnPadUp | Up button event |
| btnPadLeft | Left button event |
| btnPadRight | Right button event |
| btnPadDown | Down button event |
| btnSide | Side button |
| btnFront | Front button or Z button |
| horizontalAnalog | Horizontal analog sensor (-100/100) |
| verticalAnalog | Vertical analog sensor (0/100) |

### Annex B. Test or Unused Behaviours

### 12.24. ANT+/Bluetooth Bridge

### 12.24.1. Bridge Find Device Procedure

A ZAP Client shall trigger the Bridge Find Device procedure by sending a BRIDGE_REQUEST for a *BridgeFindDevice* procedure with *enable* set to True. To stop this procedure, the ZAP Client shall send the same procedure with *enable* set to False.

### 12.24.2. Bridge Connect

A ZAP Client can trigger a connection of the ZAP Server to a Bluetooth device by sending a BRIDGE_REQUEST for a BridgeBleConnect procedure with:
- *deviceIdentity* set to the value received in *BridgeBleDeviceFound* from the BRIDGE_EVENT
- *uuidList* set to a list of service UUID values that the ZAP Server should discover.

### 12.24.3. Bridge Disconnect

A ZAP Client can trigger a disconnect of the ZAP Server from a Bluetooth device by sending a BRIDGE_REQUEST for a *BridgeBleDisconnect* procedure with
- *handle* set to the value received in *BridgeConnect* from the BRIDGE_EVENT

### 12.24.4. Bridge Write Bluetooth Data

A ZAP Client can write characteristic values via the ZAP Server on a remote Bluetooth device by sending a BRIDGE_REQUEST for *bleData* with:
- *deviceHandle* set to the value received in the *connected* event from the BRIDGE_EVENT
- *uuid* set to the UUID of that characteristic that will be written.
- *data* set to a the raw byte array to be written

### 12.24.5. Bridge Read Bluetooth Data

A ZAP Client can read characteristic values via the ZAP Server on a remote Bluetooth device by sending a BRIDGE_REQUEST for *bleRequestData* with:
- *deviceHandle* set to the value received in the *connected* event from the BRIDGE_EVENT
- *uuid* set to the UUID of that characteristic that will be read.

### 12.24.6. Bridge Enable Bluetooth Characteristic Notifications

A ZAP Client can write to a characteristic's CCCD to enable/disable notifications or indications via the ZAP Server on a remote Bluetooth device by sending a BRIDGE_REQUEST for *bleCharEnableNotify* with
- *deviceHandle* set to the value received in the *connected* event from the BRIDGE_EVENT
- *uuid* set to the UUID of that characteristic that will be written.
- *enable* set to true to enable, false to disable

If *enable* is true and the characteristic supports notification, notification will be enabled. If the characteristic does not support notifications, indications will be enabled.

### 12.24.7. Bridge Find ANT+ Device Procedure

A ZAP Client shall trigger the Bridge Find Device procedure by sending a BRIDGE_REQUEST for a *BridgeAntFindDevice* procedure with *enable* set to True. The ZAP Client shall send the same procedure with enable set to False to stop this procedure.

### 12.24.8. Bridge ANT+ Connect

A ZAP Client can trigger a pairing of the ZAP Server to an ANT+ device by sending a BRIDGE_REQUEST for a *BridgeAntConnect* procedure with
- *extendedDeviceld* set to the value received in *BridgeAntDeviceFound* from the BRIDGE_EVENT
- *device Type* set to the value received in *BridgeAntDeviceFound* from the BRIDGE_EVENT

### 12.24.9. Bridge ANT ₊ Disconnect

A ZAP Client can trigger an unpair of the ZAP Server with an ANT+ device by sending a BRIDGE_REQUEST for a *BridgeAntDisconnect* procedure with
- *extendedDeviceld* set to the value received in *BridgeAntChannelConfigured* from the BRIDGE_EVENT
- *device Type* set to the value received in *BridgeAntChannelConfigured* from the BRIDGE_EVENT

### 12.25. BLOB Transfer

The ZAP Client uses the BLOB Transfer Procedure to transfer binary objects to the ZAP Server. The ZAP Client splits the binary object into chunks of a fixed size that are sent one by one to the ZAP Server. The chunk size is negotiated at the transfer start stage.

### 12.25.1. Sending a BLOB_TRANSFER_START

A ZAP Client shall trigger the Blob Transfer procedure by sending a BLOB_TRANSFER_START to *blobld* set to a random value, *blobType* set to a value from Table TBD, *blobSize* set to the size of the binary object and *chunkSize* set to a value lower than *blobSize.*

### 12.25.2. Sending a BLOB_TRANSFER_CHUNK

The ZAP Client shall send blob chunks the Blob Transfer procedure by sending BLOB_TRANSFER_CHUNK messages to *chunkld* set to an increasing value, and *chunkData* set to the byte array containing *chunkSize* bytes or less for the last chunk.

### 12.25.3. BLOB Transfer Abort Procedure

### 12.26. Wi-Fi Provisioning

### 12.26.1. Wi-Fi Scanning Procedure

A ZAP Client shall trigger the WiFi Scan procedure by sending a WIFI_PROV_REQUEST for a *WifiProvReqScanStartStop* with *start* set to True. The ZAP Client shall send the same procedure with *start* set to False to stop this procedure.

### 12.26.2. Wi-Fi Provision Network Procedure

A ZAP Client can trigger a connection of the ZAP Server to an Access Point by sending a WIFI_PROV_REQUEST for a *WifiProvReqProvisionNetwork* procedure with
- *SSID* set to the value received in *WifiProvEvtScannedAP* from the WIFI_PROV_EVENT.
- *passphrase* set to an appropriate value for the security protocol specified *WifiProvEvtScannedAP* from the WIFI_PROV_EVENT.
- *clear* not set or set to false

### 12.26.3. Wi-Fi Clear Network Credentials Procedure

A ZAP Client can clear the Wi-Fi credentials of the ZAP Server by sending a WIFI_PROV_REQUEST for a *WifiProvReqProvisionNetwork* procedure with *clear* set to true.

## Claims

1. A method of operating an exercise device for use in conjunction with software, the method comprising:
establish (610) a three-part communication connection between a server device and a client device, wherein:
a first connection part (630) is an asynchronous channel for transmission of messages that need not be acknowledged by a receiving device,
a second connection part (640) is a synchronous transmission channel for transmission of messages that require a response from a receiving device,
a third connection part (640) is a synchronous receiving channel for receipt of messages that are responses to a message that requires a response;
transmit (650) a first set of data over the first connection part, the first set of data being a stream of data that is relevant to the operation of the client device in conjunction with the server device, but for which confirmation of receipt is not required; and
transmit (650) or receive a second set of data, comprising a subset of a predetermined set of requests and responses, using at least one of the second connection part and third connection part, the second set of data comprising data which requires confirmation of receipt and may require a response,
wherein the first connection part and at least one of the second connection part and third connection part are configured to be open for simultaneous communication, wherein the server device is the exercise device and the client device is a computing device operating using the software

2. The method of claim 1 wherein the three-part communication connection joins the server device and the client device by a selected one of: universal serial bus (USB), 802.11x wireless, and Bluetooth^{®}.

3. The method of claim 2 wherein a format for a packet used by the three-part communication connection that relies upon a custom implementation of Bluetooth^{®} is:
a single byte operations code for the packet; and
a message portion of a length one less byte than the connection type is capable of carrying.

4. The method of claim 2 wherein a format for a packet used by the three-part communication connection that relies upon USB or 802.11x wireless connection is:
a single byte identifying the length of the packet;
a single byte operations code for the packet; and
a message portion of a length one or two less bytes than the connection type is capable of carrying.

5. The method of any preceding claim wherein the first connection part is used for transmitting messages selected from the group comprising: notifications from the exercise device, notifications from the software to the exercise device, event flagging messages, notifications from a controller device, notifications from a battery device, notifications indicating wireless internet status, lighting and/or sound effect event status notifications, intermediate game state events, notifications from a secondary controller device, notifications related to a battery status of a secondary exercise device, notifications that the secondary exercise device has paired with the software, notifications that the exercise device or the secondary exercise device has engaged a virtual gear shift process in software, notification regarding a spindown of the exercise device or a secondary exercise device, and notification that the software has lost control over the exercise device or secondary exercise device.

6. The method of any preceding claim wherein the second connection part is used for transmitting messages selected from the group comprising: a setting for the exercise device set by the software, a setting for the software for the exercise device to operate, a request to have the exercise device operate as a bridge between the software or a third device and a fourth device, a request to have the exercise device power off, a calibration setting for a touch surface controlled by the exercise device, a calibration setting for the exercise device or a secondary exercise device, a request to reset the exercise device, a request to cause a lighting element to have a selected setting, animation, or status, a request to set a setting for the secondary exercise device, a request to set one or more settings for the exercise device or for the secondary exercise device, and a request to begin a spindown of the exercise device or a secondary exercise device.

7. The method of any preceding claim wherein the third connection part is used for receiving messages selected from the group comprising: a notification regarding development information or status from the software, a notification regarding a configuration of the exercise device, a status of an ongoing data transfer from the server device to the client device, a notification of the status of lighting elements controlled by the exercise device, a notification on the diagnostic status of the exercise device, a notification of the status of a battery associated with the exercise device, a notification of a version of the exercise device, a notification regarding the SSID of a wireless network, a notification of a version of a secondary exercise device, a notification regarding an error in lighting elements controlled by the exercise device, a notification regarding the status of a setting of the exercise device or the secondary exercise device, a notification regarding a touch surface associated with the exercise device or the secondary exercise device, a notification regarding an updating status for firmware updates to the exercise device or the secondary exercise device, notifications from a log associated with the exercise device or the secondary exercise device, notifications indicating a fault with the exercise device or the secondary exercise device, notification regarding a calibration or calibration status for the exercise device or the secondary exercise device, notifications indicating that a firmware update has completed and is now locked, notifications related to information for the secondary exercise device, notifications identifying a particular version of the secondary exercise device, and notifications indicating that the three-part communication connection is supported by the server device.

8. The method of any preceding claim wherein the three-part communication connection is established when at least one of the following conditions is met:
universal serial bus (USB) enumeration is completed and a communications device class is selected;
the exercise device is connected to a computing device operating the software;
a custom implementation of Bluetooth^{®}, compatible with the software and indicating that the exercise device implements the custom implementation of Bluetooth^{®} is discovered by the software operating on the computing device and is configured to open the three-way communications connection; and
a TCP/IP session is established between the exercise device and the software operating on the computing device, and a port is configured to transmit wireless TCP data.

9. A computer program configured to perform the method of any preceding claim when executed on one or more processors.

10. An electronic device comprising:
one or more processors; and
memory storing a computer program configured to perform the method of any of claims 1 to 8 when executed on the one or more processors.

11. A client device for engaging in exercise, the client device being configured to:
establish (610) a three-part communication connection between the client device and an exercise device comprising a server device, wherein:
a first connection part (630) is an asynchronous channel for transmission of streamed data from the server device to the client device, for which confirmation of receipt is not required,
a second connection part (640) is a synchronous transmission channel for transmission of messages that require a response from a receiving device,
a third connection part (640)is a synchronous receiving channel for receipt of messages that are responses to a message that requests a response; and
receive (650) a first set of data over the first connection part and engage in communication of a second set of data over at least one of the second connection part and the third connection part,
wherein the first connection part and at least one of the second connection part and third connection part are configured to be open for simultaneous communication.

12. A method of operating a client device for engaging in exercise, the method comprising:
establishing (610) a three-part communication connection between the client device and an exercise device comprising a server device, wherein:
a first connection part (630) is an asynchronous channel for transmission of streamed
data from the server device to the client device, for which confirmation of receipt is not required,
a second connection part (640) is a synchronous transmission channel for transmission of
messages that require a response from a receiving device,
a third connection part (640) is a synchronous receiving channel for receipt of messages that are responses to a message that requests a response; and
receiving (650) a first set of data over the first connection part and engaging in communication of a second set of data over at least one of the second connection part and the third connection part,
wherein the first connection part and at least one of the second connection part and third connection part are configured to be open for simultaneous communication.

13. A computer program configured to perform the method of claim 12 when executed on one or more processors.

## Patentansprüche

1. Verfahren zum Betreiben eines Trainingsgeräts zur Verwendung in Verbindung mit Software, das Verfahren umfassend:
Herstellen (610) einer dreiteiligen Kommunikationsverbindung zwischen einer Servervorrichtung und einer Client-Vorrichtung, wobei:
ein erster Verbindungsteil (630) ein asynchroner Kanal zur Übertragung von Nachrichten ist, die von einer empfangenden Vorrichtung nicht bestätigt werden müssen,
ein zweiter Verbindungsteil (640) ein synchroner Übertragungskanal zur Übertragung von Nachrichten ist, die eine Antwort von einer empfangenden Vorrichtung erfordern,
ein dritter Verbindungsteil (640) ein synchroner Empfangskanal für den Empfang von Nachrichten ist, die Antworten auf eine Nachricht darstellen, welche eine Antwort erfordert,
Übertragen (650) eines ersten Datensatzes über den ersten Verbindungsteil, wobei der erste Datensatz ein Datenstrom ist, der für den Betrieb der Client-Vorrichtung in Verbindung mit der Servervorrichtung relevant ist, für den jedoch keine Empfangsbestätigung erforderlich ist, und
Übertragen (650) oder Empfangen eines zweiten Datensatzes, der eine Teilmenge einer vorbestimmten Menge von Anforderungen und Antworten umfasst, unter Verwendung mindestens eines des zweiten Verbindungsteils und des dritten Verbindungsteils, wobei der zweite Datensatz Daten umfasst, die eine Empfangsbestätigung erfordern und eine Antwort erfordern können,
wobei der erste Verbindungsteil und mindestens einer des zweiten Verbindungsteils und des dritten Verbindungsteils dazu beschaffen sind, für eine gleichzeitige Kommunikation offen zu sein, wobei die Servervorrichtung das Trainingsgerät ist und die Client-Vorrichtung eine Rechenvorrichtung ist, welche unter Verwendung der Software betrieben wird.

2. Verfahren nach Anspruch 1, wobei die dreiteilige Kommunikationsverbindung die Servervorrichtung und die Client-Vorrichtung über eine von Universal Serial Bus (USB), 802.11x-Funkverbindung oder Bluetooth^{®} miteinander verbindet.

3. Verfahren nach Anspruch 2, wobei ein Format für ein Paket, das von der dreiteiligen Kommunikationsverbindung verwendet wird, die auf einer KundenImplementierung von Bluetooth^{®} basierent, ist:
einen Ein-Byte-Operationscode für das Paket und
einen Nachrichtenteil mit einer Länge, die um ein Byte geringer ist als die Übertragungskapazität des jeweiligen Verbindungstyps.

4. Verfahren nach Anspruch 2, wobei ein Format für ein Paket, das von der dreiteiligen Kommunikationsverbindung verwendet wird, die auf einer USB- oder 802.11x-Drahtlosverbindung basiert, ist:
ein einzelnes Byte, das die Länge des Pakets angibt,
ein einzelner Operationscode für das Paket und
ein Nachrichtenteil mit einer Länge, die um ein oder zwei Byte geringer ist als die Übertragungskapazität des Verbindungstyps.

5. Verfahren nach einem der vorhergehenden Ansprüche, wobei der erste Verbindungsteil zur Übertragung von Nachrichten verwendet wird, die aus der Gruppe ausgewählt sind, umfassend: Benachrichtigungen vom Trainingsgerät, Benachrichtigungen von der Software an das Trainingsgerät, Ereignismarkierungsnachrichten, Benachrichtigungen von einer Steuereinheit, Benachrichtigungen von einer Batterieeinheit, Benachrichtigungen zum Status der drahtlosen Internetverbindung, Statusbenachrichtigungen zu Ereignissen bei Licht- und/oder Soundeffekten, Spielzwischenzustandsereignisse, Benachrichtigungen von einer sekundären Steuereinheit, Benachrichtigungen bezüglich des Batteriestatus eines sekundären Trainingsgeräts, Benachrichtigungen über die Kopplung des sekundären Trainingsgeräts mit der Software, Benachrichtigungen darüber, dass das Trainingsgerät oder das sekundäre Trainingsgerät einen virtuellen Gangschaltvorgang in der Software ausgelöst hat, Benachrichtigungen betreffend einen Spindown des Trainingsgeräts oder eines sekundären Trainingsgeräts sowie Benachrichtigungen darüber, dass die Software die Kontrolle über das Trainingsgerät oder das sekundäre Trainingsgerät verloren hat.

6. Verfahren nach einem der vorhergehenden Ansprüche, wobei der zweite Verbindungsteil zur Übertragung von Nachrichten verwendet wird, die aus der Gruppe ausgewählt sind, umfassend: eine durch die Software festgelegte Einstellung für das Trainingsgerät, eine Einstellung für den Betrieb der Software für das Trainingsgerät, eine Anforderung, das Trainingsgerät als Brücke zwischen der Software oder einem dritten Gerät und einem vierten Gerät zu betreiben, eine Anforderung zum Ausschalten des Trainingsgeräts, eine Kalibrierungseinstellung für eine vom Trainingsgerät gesteuerte Berührungsfläche, eine Kalibrierungseinstellung für das Trainingsgerät oder ein sekundäres Trainingsgerät, eine Anforderung zum Zurücksetzen des Trainingsgeräts, eine Anforderung, ein Beleuchtungselement auf eine ausgewählte Einstellung, Animation oder einen Status zu setzen, eine Anforderung zur Festlegung einer Einstellung für das sekundäre Trainingsgerät, eine Anforderung zur Festlegung einer oder mehrerer Einstellungen für das Trainingsgerät oder für das sekundäre Trainingsgerät, und eine Anforderung zum Einleiten eines Spindown des Trainingsgeräts oder eines sekundären Trainingsgeräts.

7. Verfahren nach einem der vorhergehenden Ansprüche, wobei der dritte Verbindungsteil zum Empfangen von Nachrichten verwendet wird, die aus der Gruppe ausgewählt sind, umfassend: eine Benachrichtigung bezüglich Entwicklungsinformationen oder des Status der Software, eine Benachrichtigung bezüglich einer Konfiguration des Trainingsgeräts, einen Status einer laufenden Datenübertragung vom Servergerät zum Client-Gerät, eine Benachrichtigung über den Status von durch das Trainingsgerät gesteuerten Beleuchtungselementen, eine Benachrichtigung über den Diagnose-Status des Trainingsgeräts, eine Benachrichtigung über den Status einer dem Trainingsgerät zugeordneten Batterie, eine Benachrichtigung über eine Version des Trainingsgeräts, eine Benachrichtigung bezüglich der SSID eines drahtlosen Netzwerks, eine Benachrichtigung über eine Version eines sekundären Trainingsgeräts, eine Benachrichtigung bezüglich eines Fehlers bei durch das Trainingsgerät gesteuerten Beleuchtungselementen, eine Benachrichtigung bezüglich des Status einer Einstellung des Trainingsgeräts oder des sekundären Trainingsgeräts, eine Benachrichtigung bezüglich einer dem Trainingsgerät oder dem sekundären Trainingsgerät zugeordneten Berührungsfläche, eine Benachrichtigung bezüglich eines Aktualisierungsstatus für Firmware-Updates für das Trainingsgerät oder das sekundäre Trainingsgerät, Benachrichtigungen aus einem dem Trainingsgerät oder dem sekundären Trainingsgerät zugeordneten Protokoll, Benachrichtigungen, die auf eine Störung des Trainingsgeräts oder des sekundären Trainingsgeräts hinweisen, eine Benachrichtigung bezüglich einer Kalibrierung oder eines Kalibrierungsstatus für das Trainingsgerät oder das sekundäre Trainingsgerät, Benachrichtigungen, die anzeigen, dass ein Firmware-Update abgeschlossen und nun gesperrt ist, Benachrichtigungen bezüglich Informationen für das sekundäre Trainingsgerät, Benachrichtigungen, die eine bestimmte Version des sekundären Trainingsgeräts identifizieren, und Benachrichtigungen, die anzeigen, dass die dreiteilige Kommunikationsverbindung vom Servergerät unterstützt wird.

8. Verfahren nach einem der vorhergehenden Ansprüche, wobei die dreiteilige Kommunikationsverbindung hergestellt wird, wenn mindestens eine der folgenden Bedingungen erfüllt ist:
die Universal-Serial-Bus-(USB)-Enumeration ist abgeschlossen und eine Kommunikationsgeräteklasse ist ausgewählt,
das Trainingsgerät ist mit einem Rechengerät verbunden, auf dem die Software ausgeführt wird,
eine Kundenimplementierung von Bluetooth^{®}, die mit der Software kompatibel ist und anzeigt, dass das Trainingsgerät die kundenspezifische Implementierung von Bluetooth^{®} implementiert, wird von der auf dem Rechengerät ausgeführten Software erkannt und ist so beschaffen, dass sie die dreiteilige Kommunikationsverbindung öffnet, und
eine TCP/IP-Sitzung ist zwischen dem Trainingsgerät und der auf dem Rechengerät ausgeführten Software aufgebaut und ein Port ist für die Übertragung drahtloser TCP-Daten beschaffen.

9. Computerprogramm, das dazu beschaffen ist, das Verfahren nach einem der vorhergehenden Ansprüche auszuführen, wenn es auf einem oder mehreren Prozessoren ausgeführt wird.

10. Elektronische Vorrichtung, umfassend:
einen oder mehrere Prozessoren und
einen Speicher, der ein Computerprogramm speichert, das dazu beschaffen ist, das Verfahren nach einem der Ansprüche 1 bis 8 auszuführen, wenn es auf dem einen oder den mehreren Prozessoren ausgeführt wird.

11. Client-Vorrichtung zum Durchführen einer Trainingseinheit, wobei die Client-Vorrichtung dazu beschaffen ist:
eine dreiteilige Kommunikationsverbindung zwischen der Client-Vorrichtung und einem Trainingsgerät, das eine Server-Vorrichtung umfasst, aufzubauen (610), wobei:
ein erster Verbindungsteil (630) ein asynchroner Kanal zur Übertragung von Nachrichten ist, die von einer empfangenden Vorrichtung nicht bestätigt werden müssen,
ein zweiter Verbindungsteil (640) ein synchroner Übertragungskanal zur Übertragung von Nachrichten ist, die eine Antwort von einer empfangenden Vorrichtung erfordern,
ein dritter Verbindungsteil (640) ein synchroner Empfangskanal für den Empfang von Nachrichten ist, die Antworten auf eine Nachricht darstellen, welche eine Antwort erfordert,
einen ersten Datensatz über den ersten Verbindungsteil zu empfangen (650) und einen zweiten Datensatz über mindestens einen des zweiten Verbindungsteils und des dritten Verbindungsteils zu kommunizieren,
wobei der erste Verbindungsteil und mindestens einer des zweiten Verbindungsteils und des dritten Verbindungsteils dazu beschaffen ist, für eine gleichzeitige Kommunikation offen zu sein.

12. Verfahren zum Betreiben einer Client-Vorrichtung zum Durchführen einer Trainingseinheit, das Verfahren umfassend:
Herstellen (610) einer dreiteiligen Kommunikationsverbindung zwischen der Client-Vorrichtung und einer Trainingsvorrichtung, die eine Server-Vorrichtung umfasst, wobei:
ein erster Verbindungsteil (630) ein asynchroner Kanal zur Übertragung von Nachrichten ist, die von einer empfangenden Vorrichtung nicht bestätigt werden müssen,
ein zweiter Verbindungsteil (640) ein synchroner Übertragungskanal zur Übertragung von Nachrichten ist, die eine Antwort von einer empfangenden Vorrichtung erfordern,
ein dritter Verbindungsteil (640) ein synchroner Empfangskanal für den Empfang von Nachrichten ist, die Antworten auf eine Nachricht darstellen, welche eine Antwort erfordert,
Empfangen (650) eines ersten Datensatzes über den ersten Verbindungsteil und Kommunizieren eines zweiten Datensatzes über mindestens einen des zweiten Verbindungsteils und des dritten Verbindungsteils,
wobei der erste Verbindungsteil und mindestens einer des zweiten Verbindungsteils und des dritten Verbindungsteils dazu beschaffen ist, für eine gleichzeitige Kommunikation offen zu sein.

13. Computerprogramm, das dazu beschaffen ist, das Verfahren nach Anspruch 12 auszuführen, wenn es auf einem oder mehreren Prozessoren ausgeführt wird.

## Revendications

1. Un procédé pour faire fonctionner un dispositif d'exercice à utiliser en conjonction avec du logiciel, le procédé comprenant :
établir (610) une connexion de communication en trois parties entre un dispositif serveur et un dispositif client, dans lequel :
une première partie (630) de connexion est un canal asynchrone de transmission de messages, dont un dispositif de réception n'a pas à accuser réception,
une deuxième partie (640) de connexion est un canal de transmission synchrone de transmission de messages, qui demandent une réponse d'un dispositif de réception,
une troisième partie (640) de connexion est un canal de réception synchrone de réception de messages, qui sont des réponses à un message demandant une réponse ;
transmettre (650) un premier ensemble de données sur la première partie de connexion, le premier ensemble de données étant un flux de données, qui est pertinent pour le fonctionnement du dispositif client en conjonction avec le dispositif serveur, mais pour lequel une confirmation de réception n'est pas demandée ; et
transmettre (650) ou recevoir un deuxième ensemble de données comprenant un sous-ensemble d'un ensemble déterminé à l'avance de demandes et de réponses, en utilisant au moins l'une de la deuxième partie de connexion et de la troisième partie de connexion, le deuxième ensemble de données comprenant des données, qui demandent confirmation de réception et peuvent demander une réponse,
dans lequel la première partie de connexion et au moins l'une de la deuxième partie de connexion et de la troisième partie de connexion sont configurées pour être ouvertes pour une communication simultanée, dans lequel le dispositif serveur est le dispositif d'exercice et le dispositif client est un dispositif informatique fonctionnant en utilisant le logiciel.

2. Le procédé de la revendication 1, dans lequel la connexion de communication en trois parties relie le dispositif serveur et le dispositif client par l'un sélectionné de : un bus série universel (USB), 802.11x sans fil et Bluetooth (marque de fabrique).

3. Le procédé de la revendication 2, dans lequel un format d'un paquet utilisé par la connexion de communication en trois parties, qui relie après mise en œuvre personnalisée de Bluetooth (marque de fabrique), est :
un code de fonctionnement à un seul octet pour le paquet ; et
une partie de message d'une longueur de moins d'un octet que le type de connexion est capable de porter.

4. Le procédé de la revendication 2, dans lequel un format d'un paquet utilisé pour la connexion de communication en trois parties, qui relie la connexion sans fil USB ou 802.11x est :
un octet unique indiquant la longueur du paquet ;
un code d'opération à un seul octet pour le paquet ; et
une partie de message d'une longueur d'un ou de deux octets de moins que le type de connexion est capable de porter.

5. Le procédé de l'une quelconque des revendications précédentes, dans lequel la première partie de connexion est utilisée pour transmettre des messages sélectionnés dans le groupe comprenant : des notifications du dispositif d'exercice, des notifications du logiciel au dispositif d'exercice, des messages de signalisation d'évènements, des notifications d'un dispositif de commande, des notifications d'un dispositif de batterie, des notifications indiquant un état internet sans fil, des notifications d'états d'évènements à effet d'éclairage et/ou sonore, des évènements intermédiaires d'états de jeu, des notifications d'un dispositif secondaire de commande, des notifications se rapportant à un état de la batterie d'un dispositif secondaire d'exercice, des notifications que le dispositif secondaire d'exercice s'est couplé au logiciel, des notifications que le dispositif d'exercice ou le dispositif secondaire d'exercice a engagé un processus virtuel de changement de vitesse en logiciel, une notification concernant un ralentissement du dispositif d'exercice ou d'un dispositif secondaire d'exercice et une notification que le logiciel a perdu le contrôle sur le dispositif d'exercice ou le dispositif secondaire d'exercice.

6. Le procédé de l'une quelconque des revendications précédentes, dans lequel la deuxième partie de connexion est utilisée pour transmettre des messages sélectionnés dans le groupe comprenant : un réglage du dispositif d'exercice réglé par le logiciel, un réglage du logiciel pour faire fonctionner le dispositif d'exercice, une demande pour que le dispositif d'exercice fonctionne comme pont entre le logiciel ou un troisième dispositif et un quatrième dispositif, une demande pour que le dispositif d'exercice cesse d'être alimenté, un réglage d'étalonnage pour une surface tactile commandée par le dispositif d'exercice, un réglage d'étalonnage du dispositif d'exercice ou d'un dispositif secondaire d'exercice, une demande de rerégler le dispositif d'exercice, une demande pour faire qu'un élément d'éclairage ait un réglage, une animation ou un état sélectionné, une demande pour régler un réglage du dispositif secondaire d'exercice, une demande pour régler un ou plusieurs réglages du dispositif d'exercice ou du dispositif secondaire d'exercice et une demande pour commencer un ralentissement du dispositif d'exercice ou d'un dispositif secondaire d'exercice.

7. Le procédé de l'une quelconque des revendications précédentes, dans lequel la troisième partie de connexion est utilisée pour recevoir des messages sélectionnés dans le groupe : une notification concernant une information de développement ou un état provenant du logiciel, une notification concernant une configuration du dispositif d'exercice, un état d'un transfert de de données en cours du dispositif serveur au dispositif client, une notification de l'état d'éléments d'éclairage commandés par le dispositif d'exercice, une notification de l'état de diagnostic du dispositif d'exercice, une notification de l'état d'une batterie associée au dispositif d'exercice, une notification d'une version du dispositif d'exercice, une notification concernant le SSID d'un réseau sans fil, une notification de la version du dispositif secondaire d'exercice, une notification concernant une erreur dans des éléments d'éclairage commandés par le dispositif d'exercice, une notification concernant l'état d'un réglage du dispositif d'exercice ou du dispositif secondaire d'exercice, une notification concernant une surface tactile associée au dispositif d'exercice ou au dispositif secondaire d'exercice, une notification concernant un état de mise à jour de microprogrammes au dispositif d'exercice ou au dispositif secondaire d'exercice, des notifications d'un registre associé au dispositif d'exercice ou au dispositif secondaire d'exercice, des notifications indiquant un défaut avec le dispositif d'exercice ou le dispositif secondaire d'exercice, une notification concernant un étalonnage ou un état d'étalonnage du dispositif d'exercice ou du dispositif secondaire d'exercice, des notifications indiquant qu'une mise à jour de microprogrammes est achevée et est maintenant verrouillée, des notifications se rapportant à une information pour le dispositif secondaire d'exercice, des notifications identifiant une version particulière du dispositif secondaire d'exercice et des notifications indiquant que la connexion de communication en trois parties est étayée par le dispositif serveur.

8. Le procédé de l'une quelconque des revendications précédentes, dans lequel la connexion de communication en trois parties est établie lorsqu'au moins l'une des conditions suivantes est satisfaite :
une énumération de bus série universel (USB) est achevée et une classe de dispositif de communication est sélectionnée ;
le dispositif d'exercice est connecté à un dispositif informatique faisant fonctionner le logiciel ;
une mise en œuvre personnalisée de Bluetooth (marque de fabrique), compatible avec le logiciel et indiquant que le dispositif d'exercice met en œuvre la mise en œuvre personnalisée de Bluetooth (marque de fabrique), est découverte par le logiciel fonctionnant sur le dispositif informatique et est configurée pour ouvrir la connexion de communication en trois voies ; et
une session TCP/IP est établie entre le dispositif d'exercice et le logiciel fonctionnant sur le dispositif informatique et un accès est configuré pour transmettre des données TCP sans fil.

9. Un programme d'ordinateur configuré pour effectuer le procédé de l'une quelconque des revendications précédentes lorsqu'il est exécuté sur un ou plusieurs processeurs.

10. Un dispositif électronique comprenant :
un ou plusieurs processeurs ; et
une mémoire mettant en mémoire un programme d'ordinateur configuré pour effectuer le procédé de l'une quelconque des revendications 1 à 8 lorsqu'il est exécuté sur le un ou les plusieurs processeurs.

11. Un dispositif client pour s'engager en exercice, le dispositif client étant configuré pour :
établir (610) une connexion de communication en trois parties entre le dispositif client et un dispositif d'exercice comprenant un dispositif serveur, dans lequel :
une première partie (630) de connexion est un canal asynchrone de transmission de messages, dont un dispositif de réception n'a pas à accuser réception,
une deuxième partie (640) de connexion est un canal de transmission synchrone de transmission de messages, qui demandent une réponse d'un dispositif de réception,
une troisième partie (640) de connexion est un canal de réception synchrone de réception de messages, qui sont des réponses à un message demandant une réponse ; et
recevoir (650) un premier ensemble de données sur la première partie de connexion et engager en communication un deuxième ensemble de données sur au moins l'une de la deuxième partie de connexion de la troisième partie de connexion,
dans lequel la première partie de connexion et au moins l'une de la deuxième partie de connexion et la troisième partie de connexion sont configurées pour être ouvertes pour communication simultanée.

12. Un procédé pour faire fonctionner un dispositif client pour s'engager en exercice, le procédé comprenant :
établir (610) une connexion de communication en trois parties entre le dispositif client et un dispositif d'exercice comprenant un dispositif serveur, dans lequel :
une première partie (630) de connexion est un canal asynchrone de transmission de messages, dont un dispositif de réception n'a pas à accuser réception,
une deuxième partie (640) de connexion est un canal de transmission synchrone de transmission de messages, qui demandent une réponse d'un dispositif de réception,
une troisième partie (640) de connexion, est un canal de réception synchrone de réception de messages, qui sont des réponses à un message demandant une réponse ; et
recevoir (650) un premier ensemble de données sur la première partie de connexion et engager en communication un deuxième ensemble de données sur au moins l'une de la deuxième partie de connexion et la troisième partie de connexion,
dans lequel la première partie de connexion et au moins l'une de la deuxième partie de connexion et la troisième partie de connexion sont configurées pour être ouvertes pour communication simultanée.

13. Un programme d'ordinateur configuré pour effectuer le procédé de la revendication 12 lorsqu'il est exécuté sur un ou plusieurs processeurs.
